(19) **Europäisches Patentamt / European Patent Office / Office européen des brevets**

(11) **EP 4 130 591 A1**

(12) **EUROPEAN PATENT APPLICATION**
published in accordance with Art. 153(4) EPC

(43) Date of publication:
**08.02.2023 Bulletin 2023/06**

(21) Application number: **20927038.8**

(22) Date of filing: **27.03.2020**

(51) International Patent Classification (IPC):
**F24F 7/007** *(1980.01)*    **F24F 7/08** *(1980.01)*
**F24F 11/41** *(2018.01)*    **F24F 11/79** *(2018.01)*

(52) Cooperative Patent Classification (CPC):
**F24F 7/007; F24F 7/08; F24F 11/41; F24F 11/79;**
Y02B 30/56

(86) International application number:
**PCT/JP2020/014202**

(87) International publication number:
**WO 2021/192263 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **SHIMOJO, Satoru**
  **Tokyo 100-8310 (JP)**
• **SAITO, Fumio**
  **Tokyo 100-8310 (JP)**
• **TAKATSU, Ryo**
  **Tokyo 100-8310 (JP)**
• **TODA, Yuta**
  **Tokyo 100-8310 (JP)**

(74) Representative: **Mewburn Ellis LLP
Aurora Building
Counterslip
Bristol BS1 6BX (GB)**

(54) **VENTILATION AND AIR CONDITIONING SYSTEM**

(57) A ventilation and air-conditioning system (1000) includes: a heat-exchange ventilation apparatus (100) discharging air in space to be ventilated (50) drawn in from a first inlet to outdoors via a heat-exchange element, and blowing air in outdoors from a first outlet into the space to be ventilated (50) via the heat-exchange element; and an air-conditioning apparatus (200) including an indoor unit (202) including a second inlet and a second outlet each installed in the space to be ventilated (50), and an outdoor unit installed outside the space to be ventilated (50), and drawing in air in the space to be ventilated (50) from the second inlet and blowing the air from the second outlet into the space to be ventilated (50). The air-conditioning apparatus (200) performs anti-freezing operation assist operation to blow air from the second outlet toward the first inlet, based on an anti-freezing operation assist request level indicating magnitude of risk of freezing occurring in the heat-exchange element of the heat-exchange ventilation apparatus (100).

FIG.1

**Description**

Field

The present invention relates to a ventilation and air-conditioning system that includes a heat-exchange ventilation apparatus and an air-conditioning apparatus.

Background

A heat-exchange ventilation apparatus that exchanges heat between outdoor air and indoor air and then blows the outdoor air into a space to be ventilated has been used, as described in Patent Literature 1. A heat-exchange ventilation apparatus described in Patent Literature 1 detects a moisture content index dependent on the amount of moisture contained in indoor air, based on the temperature and relative humidity of the indoor air, in order to prevent the progress of freezing of a heat-exchange element in winter when the outdoor temperature is low. When the temperature of outdoor air falls below a predetermined low-temperature threshold, the heat-exchange ventilation apparatus performs control to intermittently stop an air supply fan, according to the moisture content index of the indoor air, in such a manner that stop time in an intermittent operation cycle of the air supply fan becomes longer as the level of the moisture content index of the indoor air becomes higher. That is, the heat-exchange ventilation apparatus of Patent Literature 1 adjusts the intermittent operation cycle according to the moisture amount of the indoor air and the outdoor air temperature.

Citation List

Patent Literature

Patent Literature 1: Japanese Patent No. 5858061

Summary

Technical Problem

However, in the heat-exchange ventilation apparatus of Patent Literature 1, neither the moisture content of the indoor air nor the outdoor air temperature can be directly controlled by the heat-exchange ventilation apparatus. Consequently, in the heat-exchange ventilation apparatus of Patent Literature 1, the intermittent stop time can become long, depending on indoor and outdoor air conditions, even though a large number of people are in the room, resulting in insufficient ventilation.

The heat-exchange ventilation apparatus of Patent Literature 1 prevents freezing of the heat-exchange element by heating with indoor air of relatively high temperature. However, the Act on Maintenance of Sanitation in Buildings stipulates that indoor temperature should be 17°C or more and 28°C or less, and indoor temperature rarely exceeds 28°C in winter. That is, the effect of preventing freezing and the effect of limiting a decrease in ventilation volume are also restricted by an indoor temperature upper limit of 28°C.

The present invention has been made in view of the above, and an object thereof is to provide a ventilation and air-conditioning system capable of preventing or limiting a decrease in ventilation volume while preventing freezing in a heat-exchange element of a heat-exchange ventilation apparatus even when outdoor temperature is low.

Solution to Problem

In order to solve the above-described problems and achieve the object, a ventilation and air-conditioning system according to the present invention includes a heat-exchange ventilation apparatus that includes a first inlet and a first outlet each installed in a space to be ventilated, and a heat-exchange element exchanging heat between air in the outdoors and air drawn in from the space to be ventilated, and discharges air in the space to be ventilated drawn in from the first inlet to the outdoors via the heat-exchange element, and blows air in the outdoors from the first outlet into the space to be ventilated via the heat-exchange element. The ventilation and air-conditioning system includes an air-conditioning apparatus that includes an indoor unit including a second inlet and a second outlet each installed in the space to be ventilated, and an outdoor unit installed outside the space to be ventilated, and adjusts the temperature of the space to be ventilated by drawing in air in the space to be ventilated from the second inlet and blowing the air from the second outlet into the space to be ventilated. The air-conditioning apparatus performs an anti-freezing operation assist operation to blow air from the second outlet toward the first inlet, based on an anti-freezing operation assist request level indicating the magnitude of a risk of freezing occurring in the heat-exchange element of the heat-exchange ventilation apparatus.

Advantageous Effects of Invention

The ventilation and air-conditioning system according to the present invention has the effects of being able to prevent or limit a decrease in ventilation volume while preventing freezing in the heat-exchange element of the heat-exchange ventilation apparatus even when outdoor temperature is low.

Brief Description of Drawings

FIG. 1 is a plan view of a space to be ventilated in which a ventilation and air-conditioning system according to a first embodiment of the present invention is installed.
FIG. 2 is a functional block diagram of a heat-exchange ventilation unit of the ventilation and air-conditioning system according to the first embodiment.
FIG. 3 is a diagram illustrating an example of determination of air supply fan output, air exhaust fan output, and anti-freezing operation assist request level by a ventilation apparatus control unit of a heat-exchange ventilation apparatus of the ventilation and air-conditioning system according to the first embodiment.
FIG. 4 is a functional block diagram of an air-conditioning apparatus of the ventilation and air-conditioning system according to the first embodiment.
FIG. 5 is a diagram illustrating an example of determination of blowing fan output, deflector unit output, and temperature adjustment capability by an indoor unit control unit of the air-conditioning apparatus of the ventilation and air-conditioning system according to the first embodiment.
FIG. 6 is a diagram illustrating an example of a state in which the ventilation and air-conditioning system according to the first embodiment performs an anti-freezing operation assist operation with temperature adjustment "off".
FIG. 7 is a diagram illustrating an example of a state in which the ventilation and air-conditioning system according to the first embodiment is not performing the anti-freezing operation assist operation.
FIG. 8 is a diagram illustrating an example of a state in which the ventilation and air-conditioning system according to the first embodiment performs the anti-freezing operation assist operation with the temperature adjustment "on".
FIG. 9 is a diagram illustrating an example of determination of blowing fan output, deflector unit output, and temperature adjustment capability by an indoor unit control unit of an air-conditioning apparatus in a ventilation and air-conditioning system according to a second embodiment of the present invention.
FIG. 10 is a diagram illustrating an example of determination of blowing fan output, deflector unit output, and temperature adjustment capability by an indoor unit control unit of an air-conditioning apparatus in a ventilation and air-conditioning system according to a third embodiment of the present invention.
FIG. 11 is a diagram illustrating an example of determination of blowing fan output, deflector unit output, and temperature adjustment capability by an indoor unit control unit of an air-conditioning apparatus in a ventilation and air-conditioning system according to a fourth embodiment of the present invention.
FIG. 12 is a diagram illustrating a configuration in which controller functions are implemented by hardware.
FIG. 13 is a diagram illustrating a configuration in which controller functions are implemented by software.

Description of Embodiments

Hereinafter, a ventilation and air-conditioning system according to embodiments of the present invention will be described in detail with reference to the drawings. Note that the embodiments are not intended to limit the invention.

First Embodiment.

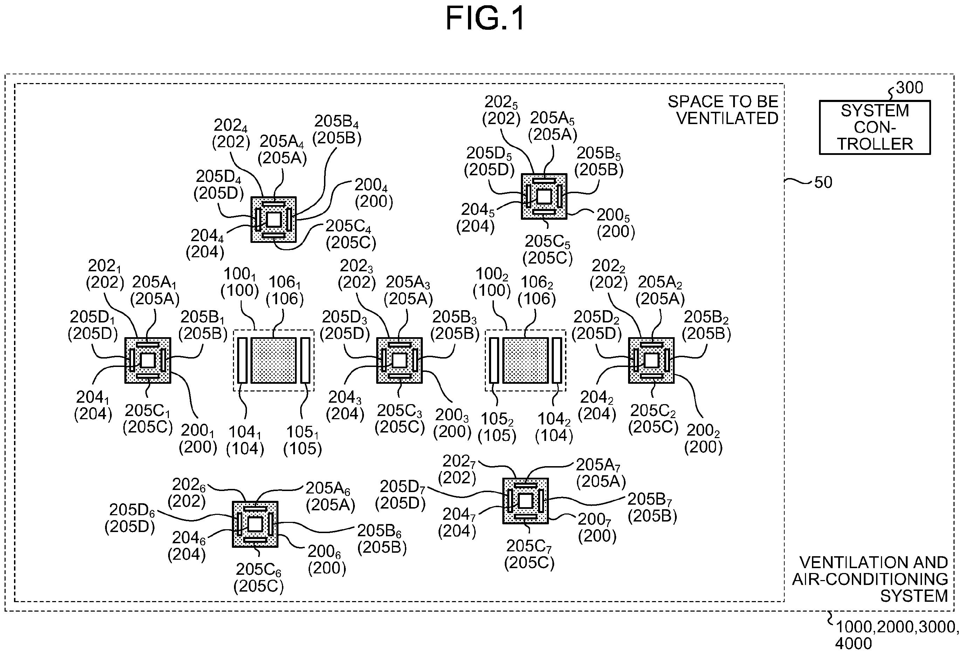

FIG. 1 is a plan view of a space to be ventilated in which a ventilation and air-conditioning system according to a first embodiment of the present invention is installed.

(Ventilation and air-conditioning system 1000)

A ventilation and air-conditioning system 1000 includes heat-exchange ventilation apparatuses $100_1$ and $100_2$, air-conditioning apparatuses $200_1$, $200_2$, $200_3$, $200_4$, $200_5$, $200_6$, and $200_7$, and a system controller 300. Hereinafter, the heat-exchange ventilation apparatuses $100_1$ and $100_2$, when not distinguished from each other, are referred to as the heat-exchange ventilation apparatus 100. The air-conditioning apparatuses $200_1$, $200_2$, $200_3$, $200_4$, $200_5$, $200_6$, and

$200_7$, when not distinguished from one another, are referred to as the air-conditioning apparatus 200. The same applies to components of the heat-exchange ventilation apparatus 100 and components of the air-conditioning apparatus 200 to be described later. When the components are distinguished from each other, a subscript is added to their reference numerals. When the components are not distinguished from each other, no subscript is added.

(Heat-exchange ventilation apparatus 100)

The heat-exchange ventilation apparatus 100 includes an indoor inlet 104 that is a first inlet disposed in a space to be ventilated 50, an indoor outlet 105 that is a first outlet disposed in the space to be ventilated 50, and a main body 106. The space to be ventilated 50 can be exemplified by, but not limited to, a room of a house, a warehouse, and a room of a building.

For the heat-exchange ventilation apparatus $100_1$, an indoor inlet $104_1$ is disposed on one end side of the outer surface facing the space to be ventilated 50, and an indoor outlet $105_1$ is disposed on the other end side of the outer surface. As illustrated in FIG. 1, the indoor inlet $104_1$ and the indoor outlet $105_1$ are spaced apart to prevent the occurrence of so-called short circuits.

For the heat-exchange ventilation apparatus $100_2$, an indoor inlet $104_2$ is disposed on one end side of the outer surface facing the space to be ventilated 50, and an indoor outlet $105_2$ is disposed on the other end side of the outer surface. As illustrated in FIG. 1, the indoor inlet $104_2$ and the indoor outlet $105_2$ are spaced apart to prevent the occurrence of so-called short circuits.

The main body 106 draws in air in the space to be ventilated 50 from the indoor inlet 104 and discharges the air to the outdoors from an outdoor outlet (not illustrated) via a heat-exchange element 140 (not illustrated in FIG. 1). The main body 106 draws in outdoor air from an outdoor inlet (not illustrated) and blows the air from the indoor outlet 105 into the space to be ventilated 50 via the heat-exchange element 140. A main body $106_1$ is connected to the indoor inlet $104_1$ and the indoor outlet $105_1$, and to the outdoor inlet and the outdoor outlet (not illustrated) via ducts (not illustrated). A main body $106_2$ is connected to the indoor inlet $104_2$ and the indoor outlet $105_2$, and to the outdoor inlet and the outdoor outlet (not illustrated) via ducts (not illustrated).

(Air-conditioning apparatus 200)

The air-conditioning apparatus 200 includes an indoor unit 202 and an outdoor unit 203 (not illustrated in FIG. 1).

(Indoor unit 202)

The indoor unit 202 includes an indoor inlet 204 that is a second inlet and indoor outlets 205A, 205B, 205C, and 205D that are second outlets, each installed in the space to be ventilated 50. The outdoor unit 203 is installed outside the space to be ventilated 50.

The air-conditioning apparatus 200 has a plurality of operation modes including heating. The air-conditioning apparatus 200 draws in air from the indoor inlet 204 of the indoor unit 202 and blows air from the indoor outlets 205A, 205B, 205C, and 205D of the indoor unit 202 to adjust the temperature of the space to be ventilated 50.

For an indoor unit $202_1$, an indoor inlet $204_1$ is disposed at a central portion of the outer surface facing the space to be ventilated 50, and indoor outlets $205A_1$, $205B_1$, $205C_1$, and $205D_1$ are disposed in a quadrilateral shape surrounding the indoor inlet $204_1$ at the outer surface.

For an indoor unit $202_2$, an indoor inlet $204_2$ is disposed at a central portion of the outer surface facing the space to be ventilated 50, and indoor outlets $205A_2$, $205B_2$, $205C_2$, and $205D_2$ are disposed in a quadrilateral shape surrounding the indoor inlet $204_2$ at the outer surface.

For an indoor unit $202_3$, an indoor inlet $204_3$ is disposed at a central portion of the outer surface facing the space to be ventilated 50, and indoor outlets $205A_3$, $205B_3$, $205C_3$, and $205D_3$ are disposed in a quadrilateral shape surrounding the indoor inlet $204_3$ at the outer surface.

For an indoor unit $202_4$, an indoor inlet $204_4$ is disposed at a central portion of the outer surface facing the space to be ventilated 50, and indoor outlets $205A_4$, $205B_4$, $205C_4$, and $205D_4$ are disposed in a quadrilateral shape surrounding the indoor inlet $204_4$ at the outer surface.

For an indoor unit $202_5$, an indoor inlet $204_5$ is disposed at a central portion of the outer surface facing the space to be ventilated 50, and indoor outlets $205A_5$, $205B_5$, $205C_5$, and $205D_5$ are disposed in a quadrilateral shape surrounding the indoor inlet $204_5$ at the outer surface.

For an indoor unit $202_6$, an indoor inlet $204_6$ is disposed at a central portion of the outer surface facing the space to be ventilated 50, and indoor outlets $205A_6$, $205B_6$, $205C_6$, and $205D_6$ are disposed in a quadrilateral shape surrounding the indoor inlet $204_6$ at the outer surface.

For an indoor unit $202_7$, an indoor inlet $204_7$ is disposed at a central portion of the outer surface facing the space to be ventilated 50, and indoor outlets $205A_7$, $205B_7$, $205C_7$, and $205D_7$ are disposed in a quadrilateral shape surrounding the indoor inlet $204_7$ at the outer surface.

(System controller 300)

The system controller 300 performs centralized control of the heat-exchange ventilation apparatus 100 and the air-conditioning apparatus 200. The system controller 300 transmits operation information to the heat-exchange ventilation apparatus 100 and the air-conditioning apparatus 200. The system controller 300 can receive information such as operating conditions output from the heat-exchange ventilation apparatus 100 or the air-conditioning apparatus 200 to reflect the information on a display such as a control screen. The system controller 300 is installed outside the space to be ventilated 50 in FIG. 1, but may be installed in the space to be ventilated 50.

The ventilation and air-conditioning system 1000 according to the first embodiment controls the directions of currents of air blown by the air-conditioning apparatus 200. The air-conditioning apparatus 200 performs an anti-freezing operation assist operation, blowing air from the indoor outlet 205A, 205B, 205C, or 205D toward the indoor inlet 104 of the heat-exchange ventilation apparatus 100. Performing the anti-freezing operation assist operation allows warm air in the vicinity of the ceiling or air warmed by heating to be drawn into the heat-exchange ventilation apparatus 100, warming the heat-exchange element 140, preventing freezing in the heat-exchange element 140, thereby preventing or limiting a decrease in ventilation volume in the heat-exchange ventilation apparatus 100.

(Functional configuration of heat-exchange ventilation apparatus 100)

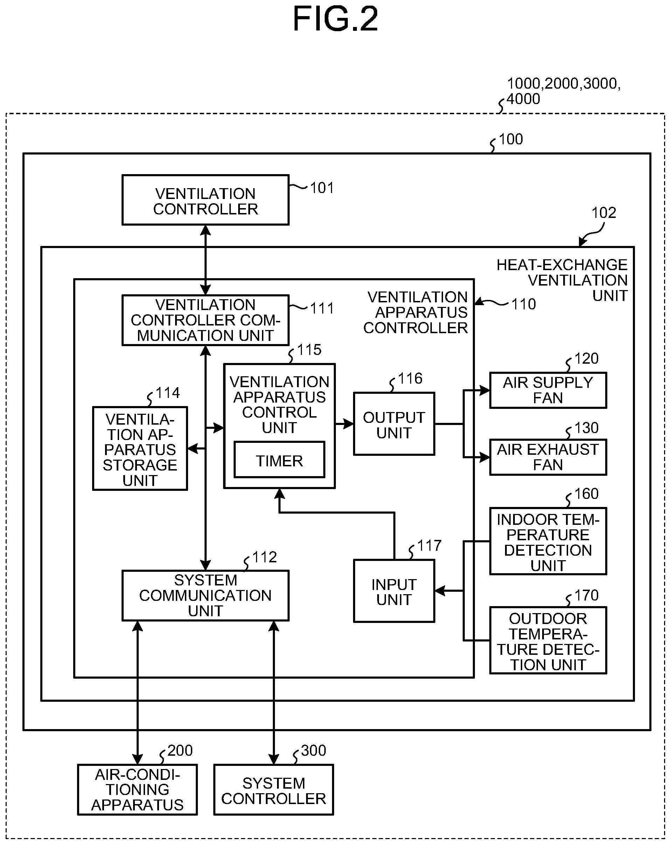

FIG. 2 is a functional block diagram of a heat-exchange ventilation unit of the ventilation and air-conditioning system according to the first embodiment. The heat-exchange ventilation apparatus 100 includes a ventilation controller 101 and a heat-exchange ventilation unit 102.

The heat-exchange ventilation unit 102 draws in air in the space to be ventilated 50 from the indoor inlet 104, and discharges the drawn-in air to the outdoors from the outdoor outlet (not illustrated) via the heat-exchange element 140. The heat-exchange ventilation unit 102 draws in outdoor air from the outdoor inlet (not illustrated) and blows the drawn-in outdoor air from the indoor outlet 105 into the space to be ventilated 50 via the heat-exchange element 140.

The heat-exchange ventilation unit 102 includes an air supply fan 120, an air exhaust fan 130, an indoor temperature detection unit 160, an outdoor temperature detection unit 170, and a ventilation apparatus controller 110.

The air supply fan 120 forms a supply air current to be supplied from the outdoors into the space to be ventilated 50. That is, the air supply fan 120 draws in outdoor air from the outdoor inlet (not illustrated), forming a current of the air to be blown from the indoor outlet 105 into the space to be ventilated 50 via the heat-exchange element 140.

The air exhaust fan 130 forms an exhaust air current to be discharged from the space to be ventilated 50 to the outdoors. That is, the air exhaust fan 130 draws in air in the space to be ventilated 50 from the indoor inlet 104, forming a current of the drawn-in air to be discharged from the outdoor outlet (not illustrated) to the outdoors via the heat-exchange element 140.

The indoor temperature detection unit 160 is a first temperature detection unit that detects the temperature of the indoor air drawn from the space to be ventilated 50 via the indoor inlet 104 into the heat-exchange ventilation apparatus 100.

The outdoor temperature detection unit 170 is an outdoor temperature detection unit that detects the temperature of the outdoor air drawn from the outdoors via the outdoor inlet into the heat-exchange ventilation apparatus 100. The heat-exchange ventilation unit 102 is installed in a ceiling space of the space to be ventilated 50 in an embedded state or a hung state. The operation of the ventilation apparatus controller 110 will be described later.

The air supply fan 120 and the air exhaust fan 130 of the heat-exchange ventilation unit 102 are drive units of the heat-exchange ventilation apparatus 100. The heat-exchange ventilation unit 102 may include an air passage switching damper for switching between heat-exchange ventilation and non-heat-exchange ventilation. When the heat-exchange ventilation unit 102 includes the air passage switching damper, the air passage switching damper also corresponds to a drive unit.

The ventilation controller 101 includes an application including a remote control program used to operate the heat-exchange ventilation apparatus 100 by remote control. The application controls the ventilation air volume etc. For example, when a user performs an operation to perform ventilation air volume change or the like from the ventilation controller 101, information input by the operation is output to a ventilation controller communication unit 111 of the ventilation apparatus controller 110. When the output of the ventilation air volume change is received, for example, the ventilation apparatus controller 110 increases or decreases the rotational speed of the air supply fan 120 and the air exhaust fan 130.

Although the ventilation controller 101 is described as being wire-connected to the heat-exchange ventilation unit 102, the ventilation controller 101 may be a remote controller that is wirelessly connected to the heat-exchange ventilation unit 102 and can remotely control the heat-exchange ventilation apparatus 100. It is also possible to adopt a system configuration in which the heat-exchange ventilation apparatus 100 is controlled only by the system controller 300. In this case, the ventilation controller 101 is unnecessary.

The ventilation air volume of the heat-exchange ventilation apparatus 100 may be switched, based on a signal input to the system controller 300 or a signal input to the heat-exchange ventilation unit 102.

The ventilation apparatus controller 110 includes the ventilation controller communication unit 111, a system communication unit 112, a ventilation apparatus storage unit 114, a ventilation apparatus control unit 115, an output unit 116, and an input unit 117. The internal components of the ventilation apparatus controller 110 can give and receive information to and from each other.

The ventilation controller communication unit 111 receives and processes operation information output from the ventilation controller 101, and transmits the processed operation information to the internal components of the ventilation apparatus controller 110. The ventilation controller communication unit 111 processes information on the heat-exchange ventilation unit 102 and transmits the processed information to the ventilation controller 101.

The system communication unit 112 receives and processes information such as operation information output from the system controller 300 and the air-conditioning apparatus 200. The system communication unit 112 processes information on the heat-exchange ventilation unit 102 and transmits the processed information to the system controller 300 or the air-conditioning apparatus 200.

Here, the information transmitted from the heat-exchange ventilation unit 102 to the system controller 300 or the air-conditioning apparatus 200 is, for example, information indicating various operating conditions of the heat-exchange ventilation unit 102. The operating conditions of the heat-exchange ventilation unit 102 are exemplified by start/stop, air volume, detected temperature, and "anti-freezing operation assist request level" to be described later.

The ventilation apparatus storage unit 114 is a storage unit that stores information such as various control setting values and programs for controlling the operation of the heat-exchange ventilation apparatus 100. The ventilation apparatus storage unit 114 is a non-volatile storage unit and is constituted by a semiconductor storage medium such as flash memory.

At a given timing such as when operation information is received via the ventilation controller communication unit 111 or the system communication unit 112, the ventilation apparatus control unit 115 reads control setting values or a program based on the operation information from the ventilation apparatus storage unit 114. Then, the ventilation apparatus control unit 115 performs various calculations based on the control setting values and the programs based on the operation information stored in the ventilation apparatus storage unit 114, and information such as the operation information transmitted from the ventilation controller 101, and transmits calculation result information to at least one of the ventilation controller 101, the output unit 116, the ventilation apparatus storage unit 114, the system controller 300, and the air-conditioning apparatus 200. The ventilation apparatus control unit 115 transmits the calculation result information to the ventilation controller 101 via the ventilation controller communication unit 111. The ventilation apparatus control unit 115 transmits the calculation result information to at least one of the system controller 300 and the air-conditioning apparatus 200 via the system communication unit 112.

The given timing is exemplified by the timing at which the ventilation apparatus control unit 115 receives the operation information, such as when the ventilation apparatus control unit 115 receives the operation information transmitted from the ventilation controller 101 via the ventilation controller communication unit 111 or when the ventilation apparatus control unit 115 receives the operation information transmitted from the system controller 300 via the system communication unit 112. The ventilation apparatus control unit 115 includes a timer to count the time required in the control etc. of the heat-exchange ventilation apparatus 100.

The output unit 116 receives the calculation results from the ventilation apparatus control unit 115 and outputs operation instructions to the air supply fan 120 and the air exhaust fan 130.

The input unit 117 processes an input signal from the indoor temperature detection unit 160 that detects the temperature of drawn-in air drawn in from the space to be ventilated 50, and an input signal from the outdoor temperature detection unit 170 that detects the temperature of drawn-in air drawn in from the outdoors, to calculate the indoor temperature and the outdoor temperature. The input unit 117 calculates exhaust temperature that is the temperature of air blown to the outdoors from the space to be ventilated 50 from the indoor temperature, the outdoor temperature, and the temperature exchange efficiency of the heat-exchange element 140, according to the following formula, and inputs the exhaust temperature to the ventilation apparatus control unit 115. That is, the input unit 117 has a function as a blowing temperature detection unit that calculates exhaust temperature that is the temperature of air blown to the outdoors.

<Formula>

Exhaust temperature = indoor temperature - (indoor temperature - outdoor temperature) × temperature exchange efficiency of heat-exchange element

The indoor temperature detection unit 160 may be provided outside the heat-exchange ventilation unit 102, such as in the duct connecting the indoor inlet 104 and the main body 106. An external device other than the heat-exchange ventilation unit 102 that can detect the temperature of air drawn in from the space to be ventilated 50 may serve as the indoor temperature detection unit 160. For example, the heat-exchange ventilation unit 102 may acquire information from a temperature detection unit included in the ventilation controller 101 via the ventilation controller communication unit 111.

The heat-exchange ventilation unit 102 may acquire temperature information acquired from a temperature detection unit (not illustrated) installed separately in the heat-exchange ventilation apparatus 100, the air-conditioning apparatus 200, or the space to be ventilated 50 managed by the system controller 300 via the system communication unit 112. If information from the temperature detection unit included in the ventilation controller 101 is acquired, temperature correction may be performed with the difference between the installation height of the ventilation controller 101 and the height of the indoor inlet 104 of the heat-exchange ventilation apparatus 100 installed at the ceiling surface taken into consideration.

The outdoor temperature detection unit 170 may be provided outside the heat-exchange ventilation unit 102, such as in the duct connecting the outdoor inlet (not illustrated) and the main body 106. An external device other than the heat-exchange ventilation unit 102 that can detect the temperature of air drawn in from the outdoors may serve as the outdoor temperature detection unit 170. For example, the heat-exchange ventilation unit 102 may acquire information on the outdoor temperature detected by the outdoor unit 203 included in the air-conditioning apparatus 200 via the system communication unit 112. The heat-exchange ventilation unit 102 may acquire outdoor temperature information acquired by the system controller 300 through an external network such as the Internet via the system communication unit 112.

The exhaust temperature is calculated from the indoor temperature detected by the indoor temperature detection unit 160, the outdoor temperature detected by the outdoor temperature detection unit 170, and the temperature exchange efficiency of the heat-exchange element 140, but an exhaust temperature detection unit for directly detecting or calculating the exhaust temperature may be provided in the heat-exchange ventilation apparatus 100.

(Example of output determination by heat-exchange ventilation apparatus 100)

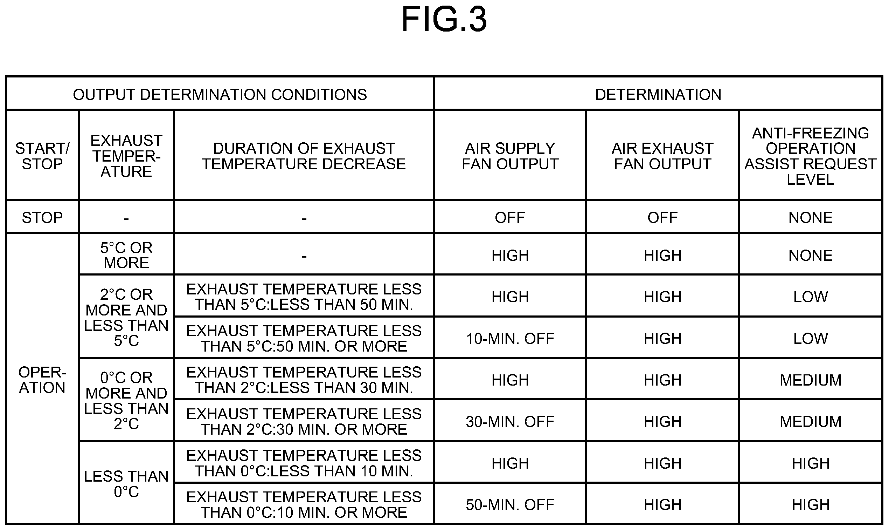

FIG. 3 is a diagram illustrating an example of determination of air supply fan output, air exhaust fan output, and anti-freezing operation assist request level by the ventilation apparatus control unit of the heat-exchange ventilation apparatus in the ventilation and air-conditioning system according to the first embodiment. Here, the "air supply fan output" is the output of the air supply fan 120. The "air exhaust fan output" is the output of the air exhaust fan 130. The "anti-freezing operation assist request level" is information transmitted by the heat-exchange ventilation apparatus 100 to the air-conditioning apparatus 200, and is information indicating the level of magnitude of the risk of freezing occurring in the heat-exchange element 140, which is determined by the ventilation apparatus control unit 115. That is, the "anti-freezing operation assist request level" is information indicating the degree of probability of freezing occurring in the heat-exchange element 140, which is predicted by the ventilation apparatus control unit 115. In other words, the "anti-freezing operation assist request level" indicates what level of the anti-freezing operation assist operation is requested to be performed.

The anti-freezing operation assist request level is determined by the ventilation apparatus control unit 115, based on the "exhaust temperature". The "exhaust temperature" is a temperature downstream of the heat-exchange element 140 in an exhaust air passage that is the passage of the exhaust air current in the heat-exchange ventilation apparatus 100.

In the air-conditioning apparatus 200, an indoor unit control unit 215 determines and decides, based on the "anti-freezing operation assist request level", whether to prioritize temperature adjustment control of an area to be air-conditioned that is an area where the air-conditioning apparatus 200 is responsible for air conditioning in the space to be ventilated 50, or perform the above-described "anti-freezing operation assist operation" by horizontally orienting a deflector unit 230 to be described later nearest to the indoor inlet 104 of the heat-exchange ventilation apparatus 100.

(Pairing heat-exchange ventilation apparatus 100 with air-conditioning apparatus 200)

For a combination of the heat-exchange ventilation apparatus 100 and the air-conditioning apparatus 200 that performs the anti-freezing operation assist operation for the heat-exchange ventilation apparatus 100, a one-to-one combination is set in the first embodiment. Thus, it is assumed that the heat-exchange ventilation apparatus 100 and the air-conditioning apparatus 200 are subjected to connection setting to be paired in advance from one of the ventilation controller 101, an air-conditioning controller 201 to be described later, and the system controller 300. In the following description, when information is exchanged between the heat-exchange ventilation apparatus 100 and the air-conditioning apparatus 200, communication is performed with a partner paired by the connection setting in advance.

In the ventilation and air-conditioning system 1000 according to the first embodiment, the anti-freezing operation assist operation for the heat-exchange ventilation apparatus $100_1$ is performed by the air-conditioning apparatus $200_1$, and the anti-freezing operation assist operation for the heat-exchange ventilation apparatus $100_2$ is performed by the air-conditioning apparatus $200_2$. For the air-conditioning apparatus 200 to perform the anti-freezing operation assist operation for the heat-exchange ventilation apparatus 100, it is basically preferable to select the air-conditioning apparatus 200 that can most efficiently supply air blown in a horizontal direction to the indoor inlet 104 of the heat-exchange ventilation apparatus 100. Specifically, the air-conditioning apparatus 200 to perform the anti-freezing operation assist operation for the heat-exchange ventilation apparatus 100 is determined with the distance between the apparatuses, whether or not the blowing direction of the indoor outlet 205 of the air-conditioning apparatus 200 faces the indoor inlet 104 of the heat-exchange ventilation apparatus 100, the shape of the indoor inlet 104 of the heat-exchange ventilation apparatus 100, whether air blown by the air-conditioning apparatus 200 disturbs a current of air blown by the heat-exchange ventilation apparatus 100, etc. taken into consideration.

In the example of FIG. 1, air blown from the indoor outlet $205A_6$ of the air-conditioning apparatus $200_6$ is also directed to the indoor inlet $104_1$. However, considering that the distance to the indoor inlet $104_1$ is longer than that of the air-conditioning apparatus $200_1$, it is preferable to select the air-conditioning apparatus $200_1$ as the air-conditioning apparatus 200 to perform the anti-freezing operation assist operation for the heat-exchange ventilation apparatus $100_1$.

Air blown from the indoor outlet $205C_4$ of the air-conditioning apparatus $200_4$ is also directed to the indoor inlet $104_1$, However, considering that its direction is out of alignment with a direction in which the indoor inlet $104_1$ is located, preventing efficient drawing in, it is preferable to select the air-conditioning apparatus $200_1$ as the air-conditioning apparatus 200 to perform the anti-freezing operation assist operation for the heat-exchange ventilation apparatus $100_1$.

If the air-conditioning apparatus $200_4$ can control the wind direction in the left and right direction, the air-conditioning apparatus $200_4$ can directly blow in the direction of the indoor inlet $104_1$. It is thus preferable to select the air-conditioning apparatus $200_4$, considering the distance to the indoor inlet $104_1$ and the fact that a current of air blown from the heat-exchange ventilation apparatus $100_1$ will not be disturbed.

For the air-conditioning apparatus $200_3$, air blown from the indoor outlet $205D_3$ is directed to the indoor inlet $104_1$ but passes through the indoor outlet $105_1$ before reaching the indoor inlet $104_1$. Consequently, an anti-freezing operation assist air current is disturbed by a current of air blown by the heat-exchange ventilation apparatus $100_1$. As a result, it is difficult to make the anti-freezing operation assist operation air current efficiently drawn into the indoor inlet $104_1$ of the heat-exchange ventilation apparatus $100_1$. Therefore, the air-conditioning apparatus $200_3$ is not suitable to perform the anti-freezing operation assist operation.

In the first embodiment, a current of air blown from the air-conditioning apparatus 200 to the heat-exchange ventilation apparatus 100 during the anti-freezing operation assist operation is along the ceiling surface, so that the current of air blown from the air-conditioning apparatus 200 does not directly hit people in the room and cause discomfort. However, if the heat-exchange ventilation apparatus 100 is installed on the floor in the space to be ventilated 50, a current of air blown from the air-conditioning apparatus 200 can directly hit people in the room, causing discomfort. In such a case, the wind direction of the air-conditioning apparatus 200 can be adjusted such that a current of air blown from the air-conditioning apparatus 200 to the heat-exchange ventilation apparatus 100 does not directly hit users.

(Output determination conditions)

The ventilation apparatus control unit 115 uses pieces of information of "start/stop", the "exhaust temperature", and the "duration of exhaust temperature decrease" as output determination conditions to determine and decide the "air supply fan output", the "air exhaust fan output", and the "anti-freezing operation assist request level". The "start/stop" indicates whether a user's instruction is an instruction to operate or an instruction to stop the heat-exchange ventilation apparatus 100. The "exhaust temperature" is a value calculated from the indoor temperature, the outdoor temperature, and the temperature exchange efficiency of the heat-exchange element 140 described above. Assume that if the temperature exchange efficiency of the heat-exchange element 140 varies depending on the supply air volume, the exhaust air volume, and the ratio between the supply air volume and the exhaust air volume, the variation is appropriately reflected in the calculation. The "duration of exhaust temperature decrease" indicates the time during which the "exhaust temperature" continues to be in a predetermined range of temperatures that are set according to the "anti-freezing operation assist request level".

(When heat-exchange ventilation apparatus 100 is at "stop")

As illustrated in FIG. 3, when the start/stop is "stop", ventilation is not necessary. In this case, regardless of the other factors, the ventilation apparatus control unit 115 sets both the air supply fan output, which is the output of the air supply fan 120, and the air exhaust fan output, which is the output of the air exhaust fan 130, to "off" and sets the anti-freezing operation assist request level to "none".

(When heat-exchange ventilation apparatus 100 is in "operation")

As illustrated in FIG. 3, when the start/stop is "operation", and the exhaust temperature is "5°C or more", the outdoors is warm, and there is no risk of freezing occurring in the heat-exchange element 140. In this case, regardless of the other factors, the ventilation apparatus control unit 115 sets both the air supply fan output and the air exhaust fan output to "high", and the anti-freezing operation assist request level to "none".

As illustrated in FIG. 3, when the start/stop is "operation", and the exhaust temperature is "less than 5°C", the outdoors is cold, and there is a risk of freezing occurring in the heat-exchange element 140. In this case, the ventilation apparatus control unit 115 sets both the air supply fan output and the air exhaust fan output to "on", and sets the anti-freezing operation assist request level such that the lower the "exhaust temperature", the higher the anti-freezing operation assist request level. This allows the prevention of occurrence of freezing in the heat-exchange element 140 even when the outdoor temperature is low. That is, a reference exhaust temperature at which it is determined that freezing may occur in the heat-exchange element 140 is "5°C".

Here, the temperature at which it is determined that freezing may occur in the heat-exchange element 140 is set to "less than 5°C" instead of "less than 0°C", with the perspectives of measurement errors of the various temperature detection units, variations in temperature exchange efficiency in the heat-exchange element 140, prevention against freezing, etc. taken into consideration. The reference temperature at which freezing may occur in the heat-exchange element 140 is not limited to "5°C". As a temperature threshold at which freezing may occur in the heat-exchange element 140, a threshold other than "5°C" may be used. Further, the threshold may be automatically changed according to the operating conditions of the heat-exchange ventilation apparatus 100.

For example, when the "exhaust temperature" is "2°C or more and less than 5°C", the anti-freezing operation assist request level is set to "low". When the "exhaust temperature" is "2°C or more and less than 5°C", and the "duration of exhaust temperature decrease" is "less than 50 minutes", that is, the time during which the "exhaust temperature is less than 5°C" is "less than 50 minutes", both the air supply fan output and the air exhaust fan output are set to "high".

On the other hand, when the "exhaust temperature" is "2°C or more and less than 5°C", and the "duration of exhaust temperature decrease" is "50 minutes or more", that is, the time during which the "exhaust temperature is less than 5°C" is "50 minutes or more", only the air supply fan output is set to "10-minute off", and the air exhaust fan output is set to "high". The setting in which only the air supply fan output is set to "10-minute off", and the air exhaust fan output is set to "high" is setting for the heat-exchange ventilation apparatus 100 to perform anti-freezing operation. Immediately after the "exhaust temperature becomes less than 5°C", there is a low probability of freezing occurring in the heat-exchange element 140. Therefore, when the time during which the "exhaust temperature is less than 5°C" is "less than 50 minutes", both the air supply fan 120 and the air exhaust fan 130 are continuously operated so as not to lower the ventilation volume of the heat-exchange ventilation apparatus 100.

On the other hand, when the time during which the "exhaust temperature is less than 5°C" continues for "50 minutes or more", there is a probability of freezing occurring in part of the heat-exchange element 140. Against this, by setting the air supply fan output to "off" to prevent low-temperature outdoor air from flowing into the heat-exchange element 140, and operating only the air exhaust fan 130, the heat-exchange element 140 is warmed by warm indoor air. Thus, even when freezing has occurred in part of the heat-exchange element 140, the ventilation apparatus control unit 115 can operate the heat-exchange ventilation apparatus 100 to eliminate the freezing of the heat-exchange element 140.

After only the air supply fan output is turned "10-minute off", a timer counting the "duration of exhaust temperature decrease", that is, a timer counting the time during which the "exhaust temperature is less than 5°C" is cleared, and the operation can be repeated from the operation when the time during which the "exhaust temperature is less than 5°C" is "less than 50 minutes". That is, after only the air supply fan output is turned "10-minute off", the ventilation apparatus control unit 115 can return the air supply fan output from "off" to "high". The timer counting the time during which the "exhaust temperature is less than 5°C" is also cleared when the "exhaust temperature becomes 5°C or more".

When the "exhaust temperature" is "0°C or more and less than 2°C", the anti-freezing operation assist request level is set to "medium". When the "exhaust temperature" is "0°C or more and less than 2°C", and the "duration of exhaust temperature decrease" is "less than 30 minutes", that is, the time during which the "exhaust temperature is less than 2°C" is "less than 30 minutes", both the air supply fan output and the air exhaust fan output are set to "high".

On the other hand, when the "exhaust temperature" is "0°C or more and less than 2°C", and the "duration of exhaust temperature decrease" is "30 minutes or more", that is, the time during which the "exhaust temperature is less than 2°C" is "30 minutes or more", only the air supply fan output is set to "30-minute off", and the air exhaust fan output is set to "high". The setting in which only the air supply fan output is set to "30-minute off" and the air exhaust fan output is set to "high" is setting for the heat-exchange ventilation apparatus 100 to perform the anti-freezing operation.

Immediately after the "exhaust temperature becomes less than 2°C", there is a low probability of freezing occurring in the heat-exchange element 140. Thus, when the time during which the "exhaust temperature is less than 2°C" is "less than 30 minutes", both the air supply fan 120 and the air exhaust fan 130 are continuously operated so as not to lower the ventilation volume of the heat-exchange ventilation apparatus 100.

On the other hand, when the time during which the "exhaust temperature is less than 2°C" continues for "30 minutes or more", there is a probability of freezing occurring in part of the heat-exchange element 140. Against this, by setting the air supply fan output to "off" to prevent low-temperature outdoor air from flowing into the heat-exchange element 140, and operating only the air exhaust fan 130, the heat-exchange element 140 is warmed by warm indoor air. Thus, even when freezing has occurred in part of the heat-exchange element 140, the ventilation apparatus control unit 115 can operate the heat-exchange ventilation apparatus 100 to eliminate the freezing of the heat-exchange element 140.

After only the air supply fan output is turned "30-minute off", a timer counting the "duration of exhaust temperature decrease", that is, a timer counting the time during which the "exhaust temperature is less than 2°C" is cleared, and the operation can be repeated from the operation when the time during which the "exhaust temperature is less than 2°C" is "less than 30 minutes". That is, the ventilation apparatus control unit 115 can return the air supply fan output from "off" to "high". The timer counting the time during which the "exhaust temperature is less than 2°C" is also cleared when the "exhaust temperature becomes 2°C or more".

When the "anti-freezing operation assist request level" is set to "medium", the probability of freezing occurring in the heat-exchange element 140 is higher than when the "anti-freezing operation assist request level" is set to "low". That is, when the "exhaust temperature" is "0°C or more and less than 2°C", the probability of freezing occurring in the heat-exchange element 140 is higher than when the "exhaust temperature" is "2°C or more and less than 5°C". Thus, when the "anti-freezing operation assist request level" is set to "medium", the timing of changing the air supply fan output from "high" to "off" is advanced from "50 minutes" to "30 minutes", compared to when the "anti-freezing operation assist request level" is set to "low". The time during which the air supply fan output is turned "off" is also increased from "10 minutes" to "30 minutes". Consequently, even when freezing has occurred in part of the heat-exchange element 140, the heat-exchange ventilation apparatus 100 can obtain a longer time to eliminate the freezing of the heat-exchange element 140.

When the "exhaust temperature" is "less than 0°C", the anti-freezing operation assist request level is set to "high". When the "exhaust temperature" is "less than 0°C", and the "duration of exhaust temperature decrease" is "less than 10 minutes", that is, the time during which the "exhaust temperature is less than 0°C" is "less than 10 minutes", both the air supply fan output and the air exhaust fan output are set to "high".

On the other hand, when the "exhaust temperature" is "less than 0°C", and the "duration of exhaust temperature decrease" is "10 minutes or more", that is, the time during which the "exhaust temperature is less than 0°C" is "10 minutes or more", only the air supply fan output is set to "50-minute off", and the air exhaust fan output is set to "high". The setting in which only the air supply fan output is set to "50-minute off", and the air exhaust fan output is set to "high" is setting for the heat-exchange ventilation apparatus 100 to perform the anti-freezing operation. Immediately after the "exhaust temperature becomes less than 0°C", there is a low probability of freezing occurring in the heat-exchange element 140. Thus, when the time during which the "exhaust temperature is less than 0°C" is "less than 10 minutes", both the air supply fan 120 and the air exhaust fan 130 are continuously operated so as not to lower the ventilation volume of the heat-exchange ventilation apparatus 100.

On the other hand, when the time during which the "exhaust temperature is less than 0°C" continues for "10 minutes or more", there is a probability of freezing occurring in part of the heat-exchange element 140. Against this, by setting the air supply fan output to "off" to prevent low-temperature outdoor air from flowing into the heat-exchange element 140, and operating only the air exhaust fan 130, the heat-exchange element 140 is warmed by warm indoor air. Thus, even when freezing has occurred in part of the heat-exchange element 140, the ventilation apparatus control unit 115 can operate the heat-exchange ventilation apparatus 100 to eliminate the freezing of the heat-exchange element 140.

After only the air supply fan output is turned "50-minute off", a timer counting the "duration of exhaust temperature decrease", that is, a timer counting the time during which the "exhaust temperature is less than 0°C" is cleared, and the operation can be repeated from the operation when the time during which the "exhaust temperature is less than 0°C" is "less than 10 minutes". That is, the ventilation apparatus control unit 115 can return the air supply fan output from "off" to "high". The timer counting the time during which the "exhaust temperature is less than 0°C" is also cleared when the "exhaust temperature becomes 0°C or more".

When the "anti-freezing operation assist request level" is set to "high", the probability of freezing occurring in the heat-exchange element 140 is higher than when the "anti-freezing operation assist request level" is set to "medium". That is, when the "exhaust temperature" is "less than 0°C", the probability of freezing occurring in the heat-exchange element 140 is higher than when the "exhaust temperature" is "0°C or more and less than 2°C". Thus, when the "anti-freezing operation assist request level" is set to "high", the timing of changing the air supply fan output from "high" to "off" is advanced from "30 minutes" to "10 minutes", compared to when the "anti-freezing operation assist request level" is set to "medium". The time during which the air supply fan output is turned "off" is also increased from "30 minutes" to "50 minutes". Consequently, even when freezing has occurred in part of the heat-exchange element 140, the heat-exchange ventilation apparatus 100 can obtain a longer time to eliminate the freezing of the heat-exchange element 140.

When the "anti-freezing operation assist request level" determined by the ventilation apparatus control unit 115 changes with changes in exhaust temperature, the ventilation apparatus control unit 115 performs the following control. That is, when the "anti-freezing operation assist request level" changes during the period in which the air supply fan output is turned off, the ventilation apparatus control unit 115 continues the off state of the air supply fan output for a predetermined period that is determined according to the anti-freezing operation assist request level before the "anti-freezing operation assist request level" changes. Then, the ventilation apparatus control unit 115 can clear the timer counting the "duration of exhaust temperature decrease" at the end of the predetermined period that is determined according to the anti-freezing operation assist request level before the "anti-freezing operation assist request level" changes. That is, at the end of the predetermined period that is determined according to the anti-freezing operation assist request level before the "anti-freezing operation assist request level" changes, the ventilation apparatus control unit 115 can clear the timer counting the time during which the exhaust temperature is less than 5°C, the timer counting the time during which the exhaust temperature is less than 2°C, or the timer counting the time during which the exhaust temperature is less than 0°C.

The heat-exchange ventilation apparatus 100 according to the first embodiment turns the air supply fan 120 "off", based on the "duration of exhaust temperature decrease" when the "anti-freezing operation assist request level" is "provided", that is, when the "anti-freezing operation assist request level" is determined to be one of "low", "medium", or "high". On the other hand, if the output of the air supply fan 120 is set to "low" instead of "off", the heat-exchange ventilation apparatus 100 can obtain the anti-freezing effect on the heat-exchange element 140. Thus, when the output of the air supply fan 120 is set to "low", even though the anti-freezing effect on the heat-exchange element 140 is less than when the output of the air supply fan 120 is set to "off", the heat-exchange ventilation apparatus 100 can limit a decrease in the ventilation volume of the heat-exchange ventilation apparatus 100.

In FIG. 3, description has been made with the example in which the operation is performed with the output of the air supply fan 120 and the air exhaust fan 130 set to "high" during the operation of the heat-exchange ventilation apparatus 100. However, the heat-exchange ventilation apparatus 100 may be operated with the output of the air supply fan 120 and the air exhaust fan 130 set to "low" during the operation. When the heat-exchange ventilation apparatus 100 is operated with the output of the air supply fan 120 and the air exhaust fan 130 set to "low", the anti-freezing effect on the heat-exchange element 140 can also be obtained by changing the air exhaust fan output from "low" to "high" instead of changing the air supply fan output from "low" to "off". In other words, to obtain the anti-freezing effect on the heat-exchange element 140, the magnitude relationship between the air supply fan output and the air exhaust fan output can be set to a relationship in which the air supply fan output is smaller than the air exhaust fan output, that is, a relationship of "air supply fan output < air exhaust fan output".

This is because the temperature exchange efficiency of the heat-exchange element 140 varies depending on the magnitude relationship between the supply air volume and the exhaust air volume in the heat-exchange ventilation apparatus 100. Specifically, by making the supply air volume of the heat-exchange ventilation apparatus 100 smaller than the exhaust air volume of the heat-exchange ventilation apparatus 100, the temperature exchange efficiency of the heat-exchange element 140 on the air supply side is increased. Thus, low-temperature outdoor air to be a supply air current captures more heat from warm indoor air to be an exhaust air current, and is blown into the room in a warmer state.

On the other hand, by making the supply air volume of the heat-exchange ventilation apparatus 100 smaller than the exhaust air volume of the heat-exchange ventilation apparatus 100, the temperature exchange efficiency of the heat-exchange element 140 on the exhaust side is decreased. Consequently, warm indoor air to be an exhaust air current is less likely to be deprived of heat from low-temperature outdoor air to be a supply air current, and is discharged to the outdoors in a warmer state.

The air supply fan output may be lowered stepwise in the order of "high" → "low" → "off", based on the "duration of exhaust temperature decrease".

The heat-exchange ventilation apparatus 100 according to the first embodiment determines the anti-freezing operation assist request level, based on the "exhaust temperature", which is a temperature downstream of the heat-exchange element 140 in the exhaust air passage of the heat-exchange ventilation apparatus 100. However, depending on the structure of the heat-exchange ventilation apparatus 100, outdoor air conditions, and indoor air conditions, the place where freezing is likely to occur in the heat-exchange element 140 varies.

Thus, the anti-freezing operation assist request level may be determined based on "outdoor temperature" that is a temperature upstream of the heat-exchange element 140 in the supply air passage of the heat-exchange ventilation apparatus 100. The supply air passage of the heat-exchange ventilation apparatus 100 is the passage of a supply air current in the heat-exchange ventilation apparatus 100. The anti-freezing operation assist request level may be determined based on "supply air temperature" that is a temperature downstream of the heat-exchange element 140 in the supply air passage of the heat-exchange ventilation apparatus 100. The anti-freezing operation assist request level may be determined based on two or more temperatures of the "exhaust temperature", the "outdoor temperature", and the "supply air temperature". That is, the ventilation apparatus control unit 115 may determine the anti-freezing operation assist request level, based on at least one of the "exhaust temperature", the "outdoor temperature", and the "supply air temperature". This increases the degree of freedom in the configuration of the heat-exchange ventilation apparatus 100 and the degree of freedom in the control of the ventilation apparatus control unit 115.

Here, the "exhaust temperature" is the temperature of air blown to the outdoors by the heat-exchange ventilation apparatus 100. The "outdoor temperature" is the temperature of air drawn in from the outdoors by the heat-exchange ventilation apparatus 100. The "supply air temperature" is the temperature of air blown into the space to be ventilated by the heat-exchange ventilation apparatus 100. That is, the determination of the anti-freezing operation assist request level by the heat-exchange ventilation apparatus 100 based on at least one of the "exhaust temperature", the "outdoor temperature", and the "supply air temperature" can be rephrased as the determination of the anti-freezing operation assist request level by the heat-exchange ventilation apparatus 100 based on at least one of the temperature of air blown to the outdoors by the heat-exchange ventilation apparatus 100, the temperature of air drawn in from the outdoors by the heat-exchange ventilation apparatus, and the temperature of air blown into the space to be ventilated by the heat-exchange ventilation apparatus 100.

Determining the anti-freezing operation assist request level corresponds to determining the air supply fan output and the air exhaust fan output as illustrated in FIG. 3. Determining the air supply fan output corresponds to controlling the volume of air blown from the indoor outlet 105, which is the first outlet, into the space to be ventilated. Determining the air exhaust fan output corresponds to controlling the volume of air drawn in from the indoor inlet 104, which is the first inlet, and blown to the outdoors.

Then, the heat-exchange ventilation apparatus 100 may make the volume of air blown into the space to be ventilated from the indoor outlet 105, which is the first outlet, smaller than the volume of air drawn in from the indoor inlet 104, which is the first inlet, and blown to the outdoors, when at least one of the case where the temperature of air blown to the outdoors is maintained in a predetermined range of temperatures for a predetermined threshold time, the case where the temperature of air drawn in from the outdoors is maintained in a predetermined range of temperatures for a predetermined threshold time, and the case where the temperature of air blown into the space to be ventilated is maintained in a predetermined range of temperatures for a predetermined threshold time is satisfied. This increases the degree of freedom in the configuration of the heat-exchange ventilation apparatus 100 and the degree of freedom in the control of the ventilation apparatus control unit 115.

The amount of freezing of the heat-exchange element 140 also varies greatly depending on the "indoor temperature and humidity". Thus, the "indoor temperature and humidity" may be added to the determination conditions for the "anti-freezing operation assist request level". Specifically, the amount of moisture contained in indoor air increases as the indoor temperature increases and as the indoor humidity increases. Thus, the ventilation apparatus control unit 115 may determine the "anti-freezing operation assist request level" such that the "anti-freezing operation assist request level" increases as the indoor temperature increases and as the indoor humidity increases.

(Functional configuration of air-conditioning apparatus 200)

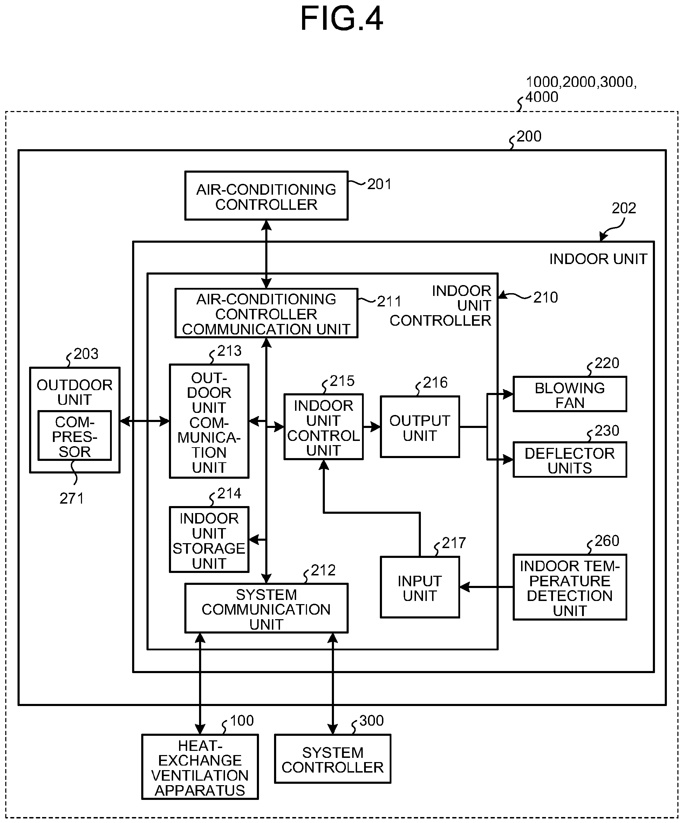

FIG. 4 is a functional block diagram of the air-conditioning apparatus of the ventilation and air-conditioning system according to the first embodiment. The air-conditioning apparatus 200 includes the air-conditioning controller 201, the indoor unit 202, and the outdoor unit 203. The indoor unit 202 and the outdoor unit 203 are connected by refrigerant piping (not illustrated).

The indoor unit 202 supplies conditioned air to the space to be ventilated 50. In the first embodiment, it is assumed that the indoor unit 202 is installed in the ceiling space. The indoor unit 202 includes an indoor unit controller 210, a blowing fan 220, deflector units 230, an indoor heat exchanger (not illustrated) to which a refrigerant is supplied, and an indoor temperature detection unit 260.

The indoor unit controller 210 is an air-conditioning apparatus controller that controls the operation of the air-conditioning apparatus 200. When controller information transmitted from the air-conditioning controller 201 is received, the indoor unit controller 210 controls the operation of the air-conditioning apparatus 200 according to the controller information. When remote control information that is information for remotely controlling the operation of the air-conditioning apparatus 200 is received, the indoor unit controller 210 controls the operation of the air-conditioning apparatus 200 according to the remote control information.

The indoor unit controller 210 includes an air-conditioning controller communication unit 211, a system communication unit 212, an outdoor unit communication unit 213, an indoor unit storage unit 214, an indoor unit control unit 215, an output unit 216, and an input unit 217.

The air-conditioning controller communication unit 211 is an interface between the air-conditioning controller 201 and the indoor unit controller 210, and receives and processes operation information output from the air-conditioning controller 201 and transmits the processed operation information to the indoor unit control unit 215. The air-conditioning controller communication unit 211 processes information on the indoor unit controller 210 and transmits the processed information to the air-conditioning controller 201.

The system communication unit 212 receives and processes information such as operation information transmitted from the system controller 300 and the heat-exchange ventilation apparatus 100. The system communication unit 212 processes information on the indoor unit 202 and transmits the processed information to the system controller 300 or the heat-exchange ventilation apparatus 100.

The outdoor unit communication unit 213 receives and processes operation information etc. output from the outdoor unit 203. The outdoor unit communication unit 213 processes information inside the indoor unit 202 and transmits the processed information to the outdoor unit 203.

Here, the information transmitted from the indoor unit 202 includes information indicating various operating conditions of the indoor unit 202. The operating conditions of the indoor unit 202 can be exemplified by start/stop, air volume, set temperature, wind direction, indoor temperature, an operation mode, the adjustment of the opening of a throttle device, and increase/decrease of the operating power of a compressor.

The indoor unit storage unit 214 is a storage unit that stores information such as various control settings and programs for controlling the operation of the air-conditioning apparatus 200. The indoor unit storage unit 214 is a nonvolatile storage unit and is constituted by a semiconductor storage medium such as flash memory.

When, for example, operation information is received via the air-conditioning controller communication unit 211, the system communication unit 212, or the outdoor unit communication unit 213, the indoor unit control unit 215 reads control settings or a program based on the operation information from the indoor unit storage unit 214. The indoor unit control unit 215 performs various calculations based on the control settings and the programs based on operation information stored in the indoor unit storage unit 214, and information such as operation information transmitted from the air-conditioning controller 201, and transmits calculation result information to at least one of the air-conditioning controller 201, the output unit 216, the indoor unit storage unit 214, the outdoor unit 203, the system controller 300, and the heat-exchange ventilation apparatus 100. The indoor unit control unit 215 transmits the calculation result information to the air-conditioning controller 201 via the air-conditioning controller communication unit 211. The indoor unit control unit 215 transmits the calculation result information to at least one of the system controller 300 and the heat-exchange ventilation apparatus 100 via the system communication unit 212. The indoor unit control unit 215 transmits the calculation result information to the outdoor unit 203 via the outdoor unit communication unit 213.

The output unit 216 receives the calculation result information from the indoor unit control unit 215, and outputs operation instructions to the blowing fan 220 and the deflector units 230.

The input unit 217 processes an input signal from the indoor temperature detection unit 260 for detecting the air temperature of an area to be air-conditioned where the air-conditioning apparatus 200 is responsible for air-conditioning, calculates indoor temperature that is a detected temperature, and inputs the indoor temperature to the indoor unit control unit 215.

The blowing fan 220 forms a supply air current to supply conditioned air from the indoor unit 202 to the space to be ventilated 50.

The indoor temperature detection unit 260 is a second temperature detection unit that detects the temperature of indoor air drawn into the air-conditioning apparatus 200 from the indoor inlet 204. The deflector units 230 that are wind direction control units capable of independently controlling the wind direction in the up-and-down direction are installed at the indoor outlets 205A, 205B, 205C, and 205D. The deflector units 230 include a rotatable deflector, a motor that rotates the deflector, etc., and are set to direct blowing wind in four directions different by 90 degrees in a horizontal plane.

The outdoor unit 203 is installed outdoors such as on the rooftop of a building. The outdoor unit 203 includes a throttle device that decompresses the refrigerant, a compressor 271 that compresses the refrigerant, a four-way valve that switches the flow path of the refrigerant, an outdoor heat exchanger that functions as an evaporator during heating operation and functions as a condenser during refrigerant operation, and an outdoor blowing fan that is attached to the outdoor heat exchanger and supplies air to the outdoor heat exchanger. The outdoor unit 203 also includes an outdoor unit controller (not illustrated) that is electrically connected to the indoor unit controller 210 of the indoor unit 202 and exchanges information with the indoor unit controller 210. The outdoor unit controller is provided, for example, in an electric component box disposed in an upper portion of a compressor chamber in which the compressor 271 and others are installed. The outdoor unit controller controls the operating power of the compressor 271 and the opening of the throttle device, based on information received from the indoor unit controller 210 of the indoor unit 202. The description is given assuming that the throttle device is installed in the outdoor unit 203, which is not limiting. The throttle device may be provided outside the outdoor unit 203.

The blowing fan 220 and the deflector units 230 of the indoor unit 202, and the compressor 271, the throttle device, the four-way valve, and the outdoor blowing fan of the outdoor unit 203 are drive units of the air-conditioning apparatus 200. The indoor unit 202 may include a plasma dust collector attached to a dust collection filter provided in the indoor unit 202, or the like. The plasma dust collector includes a counter electrode and a power supply. When the indoor unit 202 includes the plasma dust collector, the plasma dust collector also corresponds to a drive unit.

The air-conditioning controller 201 includes an application including a remote control program that is used to operate the air-conditioning apparatus 200 by remote control. The application enables input of an air volume adjustment, a set temperature adjustment, an angle adjustment of the deflector units 230, etc. For example, when a user performs an operation to change the air volume, change the set temperature, or change the angles of the deflector units 230 from the air-conditioning controller 201, information input by the operation is output to the air-conditioning controller communication unit 211 of the indoor unit controller 210. When the output of an air volume change is received, for example, the indoor unit controller 210 increases or decreases the rotational speed of the blowing fan 220. When the output of a set temperature change is received, the indoor unit controller 210 performs the adjustment of the opening of the throttle device, the increase or decrease of the operating power of the compressor 271, etc. Further, when the output of an angle change of the deflector units 230 is received, the indoor unit controller 210 operates the motors (not illustrated) that drive the deflector units 230.

The air-conditioning controller 201 is described as being connected to the indoor unit 202 by wire, but is not limited to the wired connection, and may be a remote controller that is wirelessly connected to and can remotely control the air-conditioning apparatus 200. A system configuration in which the air-conditioning apparatus 200 is operated only by the system controller 300 can be adopted. In this case, the air-conditioning controller 201 is unnecessary.

The indoor temperature detection unit 260 may be provided outside the indoor unit 202. Other than the indoor unit 202, any external device that detects the air temperature of the area to be air-conditioned may serve as the indoor temperature detection unit 260. For example, information from a temperature detection unit provided in the air-conditioning controller 201 may be acquired via the air-conditioning controller communication unit 211. Temperature information acquired from a temperature detection unit (not illustrated) separately installed in the heat-exchange ventilation apparatus 100, the air-conditioning apparatus 200, or the area to be air-conditioned managed by the system controller 300 may be acquired via the system communication unit 212. When information from the indoor temperature detection unit 160 included in the heat-exchange ventilation apparatus 100 is acquired, temperature correction may be performed with the difference between the installation height of the indoor temperature detection unit 160 and the height of the area to be air-conditioned taken into consideration.

(Example of output determination by air-conditioning apparatus 200)

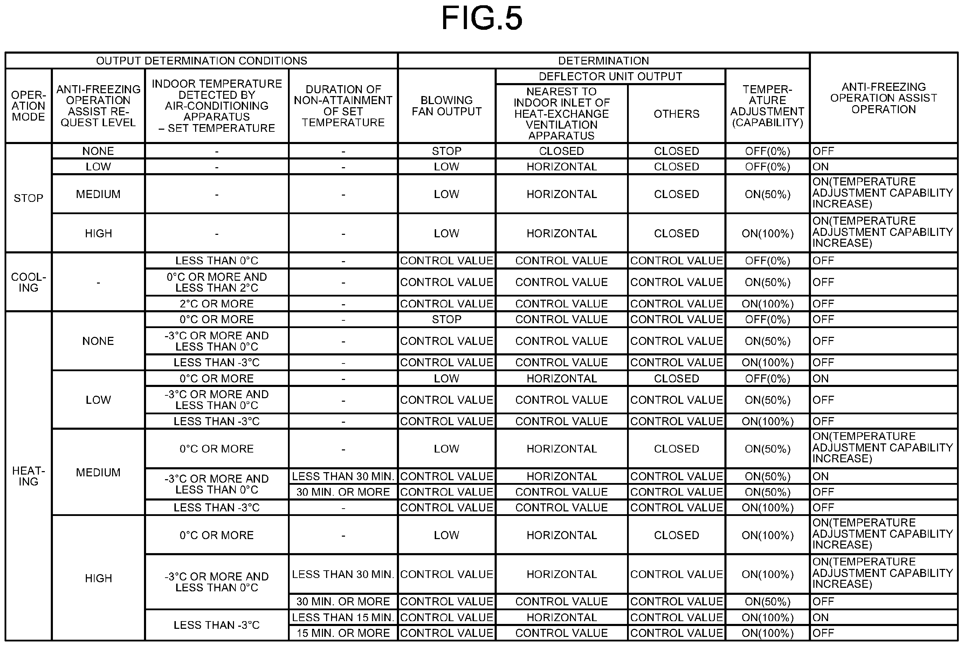

FIG. 5 is a diagram illustrating an example of determination of blowing fan output, deflector unit output, and temperature adjustment capability by the indoor unit control unit of the air-conditioning apparatus in the ventilation and air-conditioning system according to the first embodiment. For the deflector units 230, in order to independently control the wind directions of air blown from the indoor outlets 205A, 205B, 205C, and 205D, the deflector units 230 are classified into the deflector unit 230 "nearest to the indoor inlet of the heat-exchange ventilation apparatus" and the deflector units 230 "not nearest to the indoor inlet of the heat-exchange ventilation apparatus". More specifically, referring to the example in FIG. 1, in the air-conditioning apparatus $200_1$, the deflector unit 230 installed at the indoor outlet $205B_1$ is the deflector unit 230 "nearest to the indoor inlet of the heat-exchange ventilation apparatus". In the air-conditioning apparatus $200_2$, the deflector unit 230 installed at the indoor outlet $205D_2$ is the deflector unit 230 "nearest to the indoor inlet of the heat-exchange ventilation apparatus".

"Temperature adjustment" is the temperature adjustment of air blown from the indoor outlets 205 in the air-conditioning apparatus 200. The "temperature adjustment capability" is the capability to adjust the temperature of air blown from the indoor outlets 205 in the air-conditioning apparatus 200, and is indicated, for example, by 0% representing "off", "on" at 50%, and "on" at 100%. The percentage of the "temperature adjustment capability" is not limited to the above example. "On" at 50% means turning "on" with 50% capability to the maximum temperature adjustment capability in the air-conditioning apparatus 200. "On" at 100% means turning "on" with the maximum temperature adjustment capability in the air-conditioning apparatus 200.

(Output determination conditions)

The indoor unit control unit 215 uses the "operation mode" of the air-conditioning apparatus 200, the "anti-freezing operation assist request level", the "indoor temperature detected by the air-conditioning apparatus - the set temperature", and the "duration of non-attainment of the set temperature" as output determination conditions, to determine and decide the "blowing fan output", the "deflector unit output", the "temperature adjustment capability", and whether or not to perform the "anti-freezing operation assist operation".

The "operation mode" is information indicating which of heating, cooling, and stopping is a user's instruction on the operation of the air-conditioning apparatus 200.

The "anti-freezing operation assist request level" is input from the heat-exchange ventilation apparatus 100 to the indoor unit control unit 215 in the first embodiment.

The "indoor temperature detected by the air-conditioning apparatus - the set temperature" is the difference between the indoor temperature that is the detected temperature in the indoor temperature detection unit 260 and the set temperature of the air-conditioning apparatus 200 that is set in the air-conditioning apparatus 200 from the air-conditioning controller 201 or the system controller 300. The indoor temperature that is the detected temperature in the indoor temperature detection unit 260 is the detected temperature of air in the space to be ventilated 50 in the area to be air-conditioned by the air-conditioning apparatus 200 in the space to be ventilated 50.

The "duration of non-attainment of the set temperature" is the duration of a state in which the indoor temperature detected by the indoor temperature detection unit 260 of the air-conditioning apparatus 200 has not reached the set temperature since the operation mode of the air-conditioning apparatus 200 has been turned to "heating". The "duration of non-attainment of the set temperature" is cleared to zero when the temperature of the area to be air-conditioned reaches the set temperature. The indoor unit control unit 215 acquires the indoor temperature detection unit 260 and the set temperature of the air-conditioning apparatus 200 to calculate the "duration of non-attainment of the set temperature" by a timer function.

The "blowing fan output" is the output of the blowing fan 220.

The "deflector unit output" is the output of the deflector units 230, and includes the output of the "deflector unit 230 nearest to the indoor inlet 104 of the heat-exchange ventilation apparatus 100" and the output of the "deflector units 230 not nearest to the indoor inlet 104 of the heat-exchange ventilation apparatus 100".

(When air-conditioning apparatus 200 is at "stop")

As illustrated in FIG. 5, when the operation mode of the air-conditioning apparatus 200 is "stop", the air-conditioning apparatus 200 does not need to perform the temperature adjustment control on the area to be air-conditioned by the air-conditioning apparatus 200. Thus, when an anti-freezing operation assist is requested from the heat-exchange ventilation apparatus 100, the air-conditioning apparatus 200 performs the anti-freezing operation assist operation. That is, when a request for an anti-freezing operation assist is received from the heat-exchange ventilation apparatus 100, the indoor unit control unit 215 controls the anti-freezing operation assist operation.

Specifically, when the "anti-freezing operation assist request level" is "none", the indoor unit control unit 215 sets the anti-freezing operation assist operation to "off" by setting the blowing fan output to "stop", the deflector unit output nearest to the indoor inlet 104 of the heat-exchange ventilation apparatus 100 to "closed", the deflector unit output not nearest to the indoor inlet 104 of the heat-exchange ventilation apparatus 100 to "closed", and the temperature adjustment to "off".

The "blowing fan output" is the output of the blowing fan 220 of the indoor unit 202. The "deflector unit output" is the output of a control instruction to the deflector units 230.

When the received "anti-freezing operation assist request level" is "low", the indoor unit control unit 215 sets the anti-freezing operation assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "off".

When the received "anti-freezing operation assist request level" is "medium", the indoor unit control unit 215 sets the anti-freezing operation assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "on at 50%". The anti-freezing operation assist operation in this case, in which the temperature adjustment is set to "on at 50%", is thus an assist operation further improved in the anti-freezing effect in the heat-exchange element 140 by the temperature adjustment than when the "anti-freezing operation assist request level" is "low".

In FIG. 5, the case where the level of the temperature adjustment capability is increased when the anti-freezing operation assist operation is performed, compared to the case where the anti-freezing operation assist operation is not performed, is described as "temperature adjustment capability increase". For example, in FIG. 5, consider the case where the "operation mode" is "heating" and the "indoor temperature detected by the air-conditioning apparatus - the set temperature" is "0°C or more". Under these conditions, when the "anti-freezing operation assist request level" is "none" or "low", the temperature adjustment capability is "off (0%)". On the other hand, when the "anti-freezing operation assist request level" is "medium", the temperature adjustment capability is set to "on (50%)", and the level of the temperature adjustment capability is increased as compared with the case where the "anti-freezing operation assist request level" is "none" and the case where the "anti-freezing operation assist request level" is "low".

When the received "anti-freezing operation assist request level" is "high", the indoor unit control unit 215 sets the anti-freezing operation assist operation to "on" by setting the blowing fan output to "low", the deflector unit output nearest to the indoor inlet 104 of the heat-exchange ventilation apparatus 100 to "horizontal", the deflector unit output not nearest to the indoor inlet 104 of the heat-exchange ventilation apparatus 100 to "closed", and the temperature adjustment to "on at 100%". The anti-freezing operation assist operation in this case, in which the temperature adjustment is set to "on at 100%", is thus an assist operation further improved in the anti-freezing effect in the heat-exchange element 140 by the temperature adjustment than when the "anti-freezing operation assist request level" is "medium".

As described above, in the ventilation and air-conditioning system 1000, even when the operation mode of the air-conditioning apparatus 200 is "stop", the air-conditioning apparatus 200 performs the anti-freezing operation assist operation by controlling the blowing fan 220, the deflector units 230, and heating in accordance with the "anti-freezing operation assist request level" of the heat-exchange ventilation apparatus 100. Consequently, warm air present in the vicinity of the ceiling can be drawn into the heat-exchange ventilation apparatus 100, or air warmed by heating can be drawn into the heat-exchange ventilation apparatus 100. This allows the ventilation and air-conditioning system 1000 to enhance the anti-freezing effect in the heat-exchange element 140.

In the control of the anti-freezing operation assist operation, the indoor unit control unit 215 independently controls the deflector unit 230 "nearest to the indoor inlet of the heat-exchange ventilation apparatus" and the deflector units 230 "not nearest to the indoor inlet of the heat-exchange ventilation apparatus". When the operation mode of the air-conditioning apparatus 200 is "stop", the indoor unit control unit 215 sets the deflector units 230 "not nearest to the indoor inlet of the heat-exchange ventilation apparatus" to "closed". That is, when the air-conditioning apparatus 200 performs the anti-freezing operation assist operation while not performing the temperature adjustment of the space to be ventilated 50, of the plurality of deflector units 230, the deflector units 230 provided at the second outlets other than the second outlet nearest to the first inlet close the second outlets to prevent air from blowing from the second outlets.

By performing such control of the anti-freezing operation assist operation, the ventilation and air-conditioning system 1000 can obtain only the effect of preventing or limiting a decrease in the ventilation volume of the heat-exchange ventilation apparatus 100 without giving users located in the area to be air-conditioned by the air-conditioning apparatus 200 a sense of discomfort of being hit by blown air. Furthermore, since blown air does not directly hit users from the indoor unit 202 of the air-conditioning apparatus 200, it is also possible to heat air to a temperature that the users will feel too hot when the air is blown from the indoor unit 202 into the area to be air-conditioned, to be drawn into the heat-exchange ventilation apparatus 100.

(When air-conditioning apparatus 200 is "cooling")

When the operation mode is "cooling", if the heat-exchange ventilation apparatus 100 draws in air cooled by the air-conditioning apparatus 200, the air drawn in by the heat-exchange ventilation apparatus 100 acts to advance freezing in the heat-exchange element 140 of the heat-exchange ventilation apparatus 100. Thus, the air-conditioning apparatus 200 does not perform wind direction control to blow an air current toward the indoor inlet 104 of the heat-exchange ventilation apparatus 100. That is, when the operation mode is "cooling", the air-conditioning apparatus 200 can determine the operating conditions based only on the conditions of the area to be air-conditioned. That is, regardless of the "anti-freezing operation assist request level", the air-conditioning apparatus 200 sets the anti-freezing operation assist operation to "off" by setting the blowing fan output to a "control value", the deflector unit output nearest to the indoor inlet 104 to a "control value", and the deflector unit output not nearest to the indoor inlet 104 to a "control value", and increasing the capability of the temperature adjustment as the "indoor temperature detected by the air-conditioning apparatus - the set temperature" increases. The control value of the blowing fan output is set to "high", the control value of the deflector unit output nearest to the indoor inlet 104 to "swing", and the control value of the deflector unit output not nearest to the indoor inlet 104 to "swing". The "control values" are operation instruction values set on the air-conditioning apparatus 200 as the current operating conditions of the air-conditioning apparatus 200.

Thus, the air-conditioning apparatus 200 can determine whether or not to perform the anti-freezing operation assist operation, based on which of the plurality of operation modes the operation mode is. When the operation mode is "cooling", the air-conditioning apparatus 200 can determine not to perform the anti-freezing operation assist operation. This allows the air-conditioning apparatus 200 to easily determine whether or not to perform the anti-freezing operation assist operation.

As described above, when the operation mode of the air-conditioning apparatus 200 is "cooling", if the air-conditioning apparatus 200 blows an air current toward the indoor inlet 104 of the heat-exchange ventilation apparatus 100, freezing in the heat-exchange element 140 of the heat-exchange ventilation apparatus 100 is advanced. Thus, when the operation mode is "cooling", the air-conditioning apparatus 200 always performs an operation that prioritizes the temperature comfort of the area to be air-conditioned.

(When air-conditioning apparatus 200 is "heating": "anti-freezing operation assist request level (none) ")

When the operation mode is "heating", and the "anti-freezing operation assist request level" received from the heat-exchange ventilation apparatus 100 is "none", the outdoor temperature is high, and there is no risk of freezing in the heat-exchange element 140, or the heat-exchange ventilation apparatus 100 is in a "stopped" state. Thus, the air-conditioning apparatus 200 determines the operating conditions based only on the conditions of the area to be air-conditioned. Specifically, when the "indoor temperature detected by the air-conditioning apparatus - the set temperature" is "0°C or more", the indoor unit control unit 215 sets the blowing fan output to "stop" to prevent a feeling of cold air caused by blowing. When the "indoor temperature detected by the air-conditioning apparatus - the set temperature" is "less than 0°C", the indoor unit control unit 215 sets the blowing fan output to a "control value". The indoor unit control unit 215 sets the deflector unit output nearest to the indoor inlet 104 to a "control value", and the deflector unit output not nearest to the indoor inlet 104 to a "control value", and increases the capability of the temperature adjustment as the "indoor temperature detected by the air-conditioning apparatus - the set temperature" decreases. Thus, the anti-freezing operation assist operation is "off".

As described above, when the operation mode of the air-conditioning apparatus 200 is "heating", and the" anti-freezing operation assist request level" received from the heat-exchange ventilation apparatus 100 is "none", the outdoor temperature is high, and there is no risk of freezing in the heat-exchange element 140, or the heat-exchange ventilation apparatus 100 is in the "stopped" state. Thus, the air-conditioning apparatus 200 always performs an operation that prioritizes the temperature comfort of the area to be air-conditioned.

(When air-conditioning apparatus 200 is "heating": "anti-freezing operation assist request level (low) ")

When the operation mode of the air-conditioning apparatus 200 is "heating", and the "anti-freezing operation assist request level" received from the heat-exchange ventilation apparatus 100 is "low", the outdoor temperature is low, and there is a probability of freezing occurring in part of the heat-exchange element 140 due to variations in temperature exchange efficiency in the heat-exchange element 140 or the like. However, even when freezing occurs, if the amount of the freezing is a minute amount, the freezing is at a level that does not cause a major defect in the heat-exchange ventilation apparatus 100, and is not in a state of requiring an assist even if the conditions of the area to be air-conditioned are "uncomfortable". Thus, the air-conditioning apparatus 200 performs the anti-freezing operation assist operation only when the conditions of the area to be air-conditioned are "comfortable", and the temperature adjustment is set to "off".

Specifically, when the "indoor temperature detected by the air-conditioning apparatus - the set temperature" is "0°C or more", the indoor unit control unit 215 sets the anti-freezing operation assist operation to "on" by setting the blowing fan output to "low", the deflector unit output nearest to the indoor inlet 104 to "horizontal", the deflector unit output not nearest to the indoor inlet 104 to "closed", and the temperature adjustment to "off".

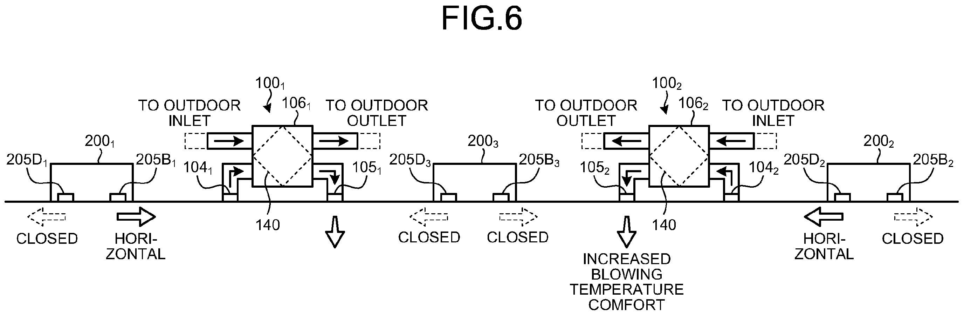

FIG. 6 is a diagram illustrating an example of a state in which the ventilation and air-conditioning system according to the first embodiment performs the anti-freezing operation assist operation with the temperature adjustment "off". In this case, since the temperature adjustment of the air-conditioning apparatus 200 is "off", warm air accumulated in the vicinity of the ceiling is sent from the air-conditioning apparatus 200 toward the indoor inlet 104. As a result of an increase in the temperature of air drawn in by the heat-exchange ventilation apparatus 100, the heat-exchange element 140 is warmed, and freezing in the heat-exchange element 140 can be prevented, so that a decrease in ventilation volume can be prevented or limited.

Returning to FIG. 5, when the "indoor temperature detected by the air-conditioning apparatus - the set temperature" is "-3°C or more and less than 0°C", the indoor unit control unit 215 sets the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, the air-conditioning apparatus 200 performs an operation that prioritizes the temperature comfort of the area to be air-conditioned.

When the "indoor temperature detected by the air-conditioning apparatus - the set temperature" is "less than -3°C", the indoor unit control unit 215 sets the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, the air-conditioning apparatus 200 performs an operation that prioritizes the temperature comfort of the area to be air-conditioned.

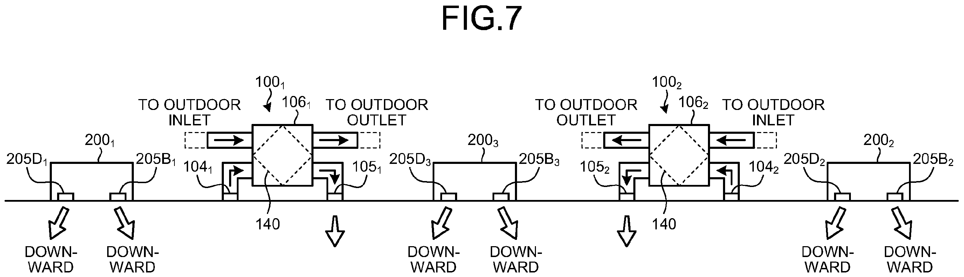

FIG. 7 is a diagram illustrating an example of a state in which the ventilation and air-conditioning system according to the first embodiment does not perform the anti-freezing operation assist operation. In the example illustrated in FIG. 7, air is blown downward from the air-conditioning apparatus 200. No air is blown from the air-conditioning apparatus 200 toward the indoor inlet 104. Thus, the temperature of air drawn in by the heat-exchange ventilation apparatus 100 is not increased by the influence of the air blown by the air-conditioning apparatus 200. Consequently, there is a probability of freezing occurring in the heat-exchange element 140.

As described above, in the ventilation and air-conditioning system 1000, when the operation mode of the air-conditioning apparatus 200 is "heating", and the "anti-freezing operation assist request level" is "low", the air-conditioning apparatus 200 performs the anti-freezing operation assist operation only when the "indoor temperature detected by the air-conditioning apparatus - the set temperature" in the area to be air-conditioned by the air-conditioning apparatus 200 is in a state of "0°C or more". That is, when the "anti-freezing operation assist request level" is "low", the outdoor temperature is low, and there is a probability of freezing occurring in part of the heat-exchange element 140 due to variations in temperature exchange efficiency in the heat-exchange element 140 or the like. However, in that case, even when freezing occurs, the amount of the freezing is minute, and the freezing is at a level that does not cause a major defect in the heat-exchange ventilation apparatus 100. Therefore, only when the temperature comfort of the area to be air-conditioned is satisfied, that is, when the "indoor temperature detected by the air-conditioning apparatus - the set temperature" is "0°C or more", the air-conditioning apparatus 200 prioritizes the prevention of freezing in the heat-exchange element 140 of the heat-exchange ventilation apparatus 100 over the temperature comfort of the area to be air-conditioned.

However, when the temperature comfort of the area to be air-conditioned is no longer satisfied, the air-conditioning apparatus 200 prioritizes improvement of the temperature comfort of the area to be air-conditioned over the prevention of freezing in the heat-exchange element 140 of the heat-exchange ventilation apparatus 100. In other words, the air-conditioning apparatus 200 performs the anti-freezing operation assist operation after considering a balance between the temperature comfort of the area to be air-conditioned and the prevention of freezing in the heat-exchange element 140 of the heat-exchange ventilation apparatus 100.

When the "indoor temperature detected by the air-conditioning apparatus - the set temperature" in the area to be air-conditioned by the air-conditioning apparatus 200 is in a state of "0°C or more", the temperature comfort of the area to be air-conditioned is satisfied, and warm air present in the vicinity of the ceiling can be drawn into the heat-exchange ventilation apparatus 100. This improves the anti-freezing effect in the heat-exchange element 140 of the heat-exchange ventilation apparatus 100, allowing prevention or limitation of a decrease in ventilation volume due to the anti-freezing operation of the heat-exchange ventilation apparatus 100.

When the "indoor temperature detected by the air-conditioning apparatus - the set temperature" is in a state of "0°C or more" in the area to be air-conditioned, the temperature comfort of blown air blown by the heat-exchange ventilation apparatus 100 is also improved, and a user immediately below the indoor outlet 105 of the heat-exchange ventilation apparatus 100 is not given a sense of discomfort associated with cold air.

Performing the anti-freezing operation assist operation can prevent the occurrence of temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" are controlled independently of each other. Consequently, even when the anti-freezing operation assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the anti-freezing operation assist operation is "on".

(When air-conditioning apparatus 200 is "heating": "anti-freezing operation assist request level (medium)")

The case where the operation mode of the air-conditioning apparatus 200 is "heating", and the "anti-freezing operation assist request level" received from the heat-exchange ventilation apparatus 100 is "medium" is the case where the outdoor temperature is low, and there is a probability of freezing at the level of occurring in a large portion of the heat-exchange element 140.

Therefore, the air-conditioning apparatus 200 needs to perform the anti-freezing operation assist operation by increasing its priority, and thus performs the anti-freezing operation assist operation in a state where the "indoor temperature detected by the air-conditioning apparatus - the set temperature" in the area to be air-conditioned is in a state of "0°C or more".

When the "indoor temperature detected by the air-conditioning apparatus - the set temperature" in the area to be air-conditioned is "-3°C or more and less than 0°C", the air-conditioning apparatus 200 performs the anti-freezing operation assist operation. However, when the "duration of non-attainment of the set temperature" becomes long, the air-conditioning apparatus 200 prioritizes the temperature adjustment control of the area to be air-conditioned. That is, the air-conditioning apparatus 200 prioritizes one of the anti-freezing operation assist operation and the temperature adjustment control of the area to be air-conditioned, based on the "duration of non-attainment of the set temperature".

When the "indoor temperature detected by the air-conditioning apparatus - the set temperature" in the area to be air-conditioned is "less than -3°C", the air-conditioning apparatus 200 prioritizes the temperature adjustment control of the area to be air-conditioned.

Specifically, when the "indoor temperature detected by the air-conditioning apparatus - the set temperature" is "0°C or more", the indoor unit control unit 215 sets the anti-freezing operation assist operation to "on" by setting the blowing fan output to "low", the deflector unit output nearest to the indoor inlet 104 to "horizontal", the deflector unit output not nearest to the indoor inlet 104 to "closed", and the temperature adjustment to "on at 50%". The anti-freezing operation assist operation in this case is an assist operation in which the anti-freezing effect in the heat-exchange element 140 of the heat-exchange ventilation apparatus 100 is further improved by the temperature adjustment of the air-conditioning apparatus 200 than when the temperature adjustment of the air-conditioning apparatus 200 is "off".

When the "indoor temperature detected by the air-conditioning apparatus - the set temperature" is "-3°C or more and less than 0°C", and the "duration of non-attainment of the set temperature" is "less than 30 minutes", the indoor unit control unit 215 sets the anti-freezing operation assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 50%". Here, "30 minutes" are a predetermined threshold time for the indoor unit control unit 215 to determine whether or not to set the anti-freezing operation assist operation to "on". The threshold time is determined in advance and stored in the indoor unit control unit 215. The threshold time may be stored in the indoor unit storage unit 214. The threshold time can be changed to any time by a user.

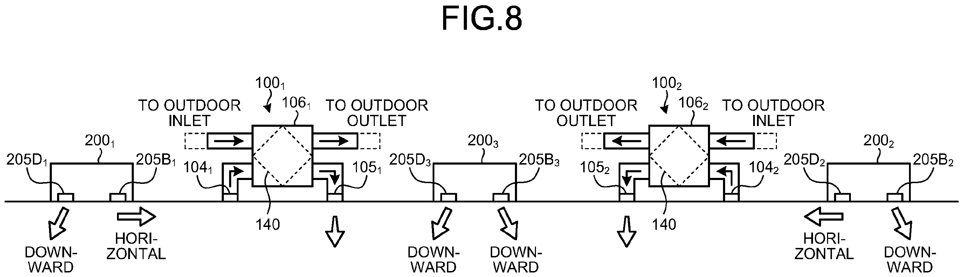

FIG. 8 is a diagram illustrating an example of a state in which the ventilation and air-conditioning system according to the first embodiment performs the anti-freezing operation assist operation with the temperature adjustment "on". In this case, since the temperature adjustment of the air-conditioning apparatus 200 is "on", air warmed by the heating of the air-conditioning apparatus 200 is sent from the air-conditioning apparatus 200 toward the indoor inlet 104. Consequently, the anti-freezing effect in the heat-exchange element 140 of the heat-exchange ventilation apparatus 100 is further improved than when the anti-freezing operation assist operation with the temperature adjustment of the air-conditioning apparatus 200 being "off" is performed as illustrated in FIG. 6.

Returning to FIG. 5, when the "indoor temperature detected by the air-conditioning apparatus - the set temperature" is "-3°C or more and less than 0°C", and the "duration of non-attainment of the set temperature" is "30 minutes or more", the indoor unit control unit 215 sets the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, since the "duration of non-attainment of the set temperature" is equal to or more than the threshold time, the air-conditioning apparatus 200 prioritizes the temperature adjustment control of the area to be air-conditioned over the anti-freezing operation assist operation.

When the "indoor temperature detected by the air-conditioning apparatus - the set temperature" is "less than -3°C", the indoor unit control unit 215 sets the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, the air-conditioning apparatus 200 prioritizes the temperature adjustment control of the area to be air-conditioned over the anti-freezing operation assist operation.

In FIG. 5, when the "duration of non-attainment of the set temperature" is "30 minutes or more", the indoor unit control unit 215 may perform the operation when the anti-freezing operation assist request level is "none", regardless of the "indoor temperature detected by the air-conditioning apparatus - the set temperature". That is, the indoor unit control unit 215 may set the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%" or "on at 100%", appropriately, based on the "indoor temperature detected by the air-conditioning apparatus - the set temperature". That is, since the "duration of non-attainment of the set temperature" is equal to or more than the threshold time, the air-conditioning apparatus 200 prioritizes the temperature adjustment control of the area to be air-conditioned over the anti-freezing operation assist operation. That is, the air-conditioning apparatus 200 may determine whether or not the air-conditioning apparatus 200 performs the anti-freezing operation assist operation, based only on the time during which the indoor temperature detected by the air-conditioning apparatus 200 has not reached the set temperature.

As described above, in the ventilation and air-conditioning system 1000, when the operation mode of the air-conditioning apparatus 200 is "heating", and the "anti-freezing operation assist request level" is "medium", the air-conditioning apparatus 200 performs the anti-freezing operation assist operation when the "indoor temperature detected by the air-conditioning apparatus - the set temperature" in the area to be air-conditioned by the air-conditioning apparatus 200 is in a state of "-3°C or more and less than 0°C", in addition to when the "indoor temperature detected by the air-conditioning apparatus - the set temperature" in the area to be air-conditioned is in a state of "0°C or more". That is, when the "anti-freezing operation assist request level" is "medium", the outdoor temperature is low, and there is a probability of freezing occurring in a large portion of the heat-exchange element 140 without the anti-freezing operation assist operation. Thus, when the "indoor temperature detected by the air-conditioning apparatus - the set temperature" in the area to be air-conditioned is in a state of "-3°C or more and less than 0°C", and the "duration of non-attainment of the set temperature" is less than the threshold time, that is, when the temperature comfort of the area to be air-conditioned is at a slightly uncomfortable level, the air-conditioning apparatus 200 prioritizes the prevention of freezing in the heat-exchange element 140 of the heat-exchange ventilation apparatus 100 over the temperature comfort of the area to be air-conditioned.

However, when the temperature comfort of the area to be air-conditioned is at an uncomfortable level, that is, when the "indoor temperature detected by the air-conditioning apparatus - the set temperature" in the area to be air-conditioned is in a state of "less than -3°C", and when the "duration of non-attainment of the set temperature" is equal to or more than the threshold time, the improvement of the temperature comfort of the area to be air-conditioned is prioritized over the prevention of freezing in the heat-exchange element 140 of the heat-exchange ventilation apparatus 100. In other words, the air-conditioning apparatus 200 performs the anti-freezing operation assist operation after considering a balance between the temperature comfort of the area to be air-conditioned and the prevention of freezing in the heat-exchange element 140 of the heat-exchange ventilation apparatus 100.

When the "indoor temperature detected by the air-conditioning apparatus - the set temperature" in the area to be air-conditioned by the air-conditioning apparatus 200 is in a state of "0°C or more", the air-conditioning apparatus 200 can adjust the temperature of warm air present in the vicinity of the ceiling to further increase the temperature of the warm air present in the vicinity of the ceiling and make the warm air drawn into the heat-exchange ventilation apparatus 100. Consequently, compared to the case where the air-conditioning apparatus 200 performs the anti-freezing operation assist operation without performing the temperature adjustment, the anti-freezing effect in the heat-exchange element 140 of the heat-exchange ventilation apparatus 100 is significantly improved, and a decrease in ventilation volume due to the anti-freezing operation of the heat-exchange ventilation apparatus 100 can be prevented or limited.

By performing the anti-freezing operation assist operation, the temperature comfort of blown air blown by the heat-exchange ventilation apparatus 100 is also improved, preventing a sense of discomfort associated with cold air from being given to a user immediately below the indoor outlet 105 of the heat-exchange ventilation apparatus 100.

Further, performing the anti-freezing operation assist operation can prevent temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" are controlled independently of each other. Consequently, even when the anti-freezing operation assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the anti-freezing operation assist operation is "on".

(When air-conditioning apparatus 200 is "heating": "anti-freezing operation assist request level (high) ")

The case where the operation mode of the air-conditioning apparatus 200 is "heating", and the "anti-freezing operation assist request level" received from the heat-exchange ventilation apparatus 100 is "high" is the case where the outdoor temperature is low, and there is a probability of freezing at a level of occurring rapidly in a large portion of the heat-exchange element 140. Therefore, the air-conditioning apparatus 200 needs to perform the anti-freezing operation assist operation by further increasing its priority, and thus performs the anti-freezing operation assist operation regardless of the conditions of the area to be air-conditioned.

However, when the "duration of non-attainment of the set temperature" becomes long, the air-conditioning apparatus 200 prioritizes the temperature adjustment control of the area to be air-conditioned. That is, the air-conditioning apparatus 200 prioritizes one of the anti-freezing operation assist operation and the temperature adjustment control of the area to be air-conditioned, based on the "duration of non-attainment of the set temperature".

Specifically, when the "indoor temperature detected by the air-conditioning apparatus - the set temperature" is "0°C or more", the indoor unit control unit 215 sets the anti-freezing operation assist operation to "on" by setting the blowing fan output to "low", the deflector unit output nearest to the indoor inlet 104 to "horizontal", the deflector unit output not nearest to the indoor inlet 104 to "closed", and the temperature adjustment to "on at 100%". The anti-freezing operation assist operation in this case is an assist operation in which the anti-freezing effect in the heat-exchange element 140 of the heat-exchange ventilation apparatus 100 is further improved by the temperature adjustment of the air-conditioning apparatus 200 than when the temperature adjustment of the air-conditioning apparatus 200 is "off".

When the "indoor temperature detected by the air-conditioning apparatus - the set temperature" is "-3°C or more and less than 0°C", and the "duration of non-attainment of the set temperature" is "less than 30 minutes", the indoor unit control unit 215 sets the anti-freezing operation assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 100%". The anti-freezing operation assist operation in this case is an assist operation in which the anti-freezing effect in the heat-exchange element 140 of the heat-exchange ventilation apparatus 100 is further improved by the temperature adjustment of the air-conditioning apparatus 200 than when the temperature adjustment of the air-conditioning apparatus 200 is "off". Here, "30 minutes" are a threshold time.

When the "indoor temperature detected by the air-conditioning apparatus - the set temperature" is "-3°C or more and less than 0°C", and the "duration of non-attainment of the set temperature" is "30 minutes or more", the indoor unit control unit 215 sets the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%". That is, since the "duration of non-attainment of the set temperature" is equal to or more than the threshold time, the air-conditioning apparatus 200 prioritizes the temperature adjustment control of the area to be air-conditioned over the anti-freezing operation assist operation.

When the "indoor temperature detected by the air-conditioning apparatus - the set temperature" is "less than -3°C", and the "duration of non-attainment of the set temperature" is "less than 15 minutes", the indoor unit control unit 215 sets the anti-freezing operation assist operation to "on" by setting the blowing fan output to a "control value", the deflector unit output nearest to the indoor inlet 104 to "horizontal", the deflector unit output not nearest to the indoor inlet 104 to a "control value", and the temperature adjustment to "on at 100%". The anti-freezing operation assist operation in this case is an assist operation in which the anti-freezing effect in the heat-exchange element 140 of the heat-exchange ventilation apparatus 100 is further improved by the temperature adjustment of the air-conditioning apparatus 200 than when the temperature adjustment of the air-conditioning apparatus 200 is "off". Here, "15 minutes" are a threshold time.

When the "indoor temperature detected by the air-conditioning apparatus - the set temperature" is "less than -3°C", and the "duration of non-attainment of the set temperature" is "15 minutes or more", the anti-freezing operation assist operation is set to "off" by setting the blowing fan output to a "control value", the deflector unit output nearest to the indoor inlet 104 to a "control value", the deflector unit output not nearest to the indoor inlet 104 to a "control value", and the temperature adjustment to "on at 100%". That is, since the "duration of non-attainment of the set temperature" is equal to or more than the threshold time, the air-conditioning apparatus 200 prioritizes the temperature adjustment control of the area to be air-conditioned over the anti-freezing operation assist operation.

As in the above-described case (when air-conditioning apparatus 200 is "heating": "anti-freezing operation assist request level (medium)), in FIG. 5, if the "duration of non-attainment of the set temperature" is "30 minutes or more", the indoor unit control unit 215 may perform the operation when the anti-freezing operation assist request level is "none", regardless of the "indoor temperature detected by the air-conditioning apparatus - the set temperature". That is, the indoor unit control unit 215 may set the anti-freezing operation assist operation to "off" by setting the blowing fan output to a "control value", the deflector unit output nearest to the indoor inlet 104 to a "control value", the deflector unit output not nearest to the indoor inlet 104 to a "control value", and the temperature adjustment to "on at 50%" or "on at 100%", appropriately, based on the "indoor temperature detected by the air-conditioning apparatus - the set temperature". That is, since the "duration of non-attainment of the set temperature" is equal to or more than the threshold time, the air-conditioning apparatus 200 prioritizes the temperature adjustment control of the area to be air-conditioned over the anti-freezing operation assist operation. That is, the air-conditioning apparatus 200 may determine whether or not the air-conditioning apparatus 200 performs the anti-freezing operation assist operation, based only on the time during which the indoor temperature detected by the air-conditioning apparatus 200 has not reached the set temperature.

When the air-conditioning apparatus 200 determines whether or not to perform the anti-freezing operation assist operation, based only on the time during which the indoor temperature detected by the air-conditioning apparatus 200 has not reached the set temperature, the threshold time may be changed according to the assist request level. For example, when the assist request level is "medium", the threshold time is set to "30 minutes". When the assist request level is "high", the threshold time is set to "60 minutes". That is, since the "duration of non-attainment of the set temperature" is equal to or more than the threshold time, the air-conditioning apparatus 200 prioritizes the temperature adjustment control of the area to be air-conditioned over the anti-freezing operation assist operation. However, when the anti-freezing operation assist request level is high, the air-conditioning apparatus 200 prioritizes the assist operation if possible.

As described above, in the ventilation and air-conditioning system 1000, when the operation mode of the air-conditioning apparatus 200 is "heating", and the "anti-freezing operation assist request level" is "high", the anti-freezing operation assist operation is performed except when the "duration of non-attainment of the set temperature" is equal to or more than the threshold time. That is, when the "anti-freezing operation assist request level" is "high", the outdoor temperature is low, and there is a probability of freezing occurring rapidly in a large portion of the heat-exchange element 140 without the anti-freezing operation assist operation. Therefore, even if the temperature comfort of the area to be air-conditioned is not satisfied, the air-conditioning apparatus 200 prioritizes the prevention of freezing in the heat-exchange element 140 of the heat-exchange ventilation apparatus 100 over the temperature comfort of the area to be air-conditioned.

However, when the "duration of non-attainment of the set temperature" has become equal to or more than the predetermined threshold time, the improvement of the temperature comfort of the area to be air-conditioned is prioritized over the prevention of freezing in the heat-exchange element 140 of the heat-exchange ventilation apparatus 100. In other words, the air-conditioning apparatus 200 performs the anti-freezing operation assist operation after considering a balance between the temperature comfort of the area to be air-conditioned and the prevention of freezing in the heat-exchange element 140.

When the "indoor temperature detected by the air-conditioning apparatus - the set temperature" in the area to be air-conditioned by the air-conditioning apparatus 200 is in a state of "less than 0°C", the air-conditioning apparatus 200 can adjust the temperature of warm air present in the vicinity of the ceiling to further increase the temperature of the warm air present in the vicinity of the ceiling and make the warm air drawn into the heat-exchange ventilation apparatus 100. Consequently, compared to the case where the air-conditioning apparatus 200 performs the anti-freezing operation assist operation without performing the temperature adjustment, the anti-freezing effect in the heat-exchange element 140 of the heat-exchange ventilation apparatus 100 is significantly improved, and a decrease in ventilation volume due to the anti-freezing operation of the heat-exchange ventilation apparatus 100 can be prevented or limited.

When the "indoor temperature detected by the air-conditioning apparatus - the set temperature" in the area to be air-conditioned by the air-conditioning apparatus 200 is in a state of "less than 0°C", the air-conditioning apparatus 200 can adjust the temperature of warm air present in the vicinity of the ceiling to further increase the temperature of the warm air present in the vicinity of the ceiling and make the warm air drawn into the heat-exchange ventilation apparatus 100. Therefore, compared to the case where the air-conditioning apparatus 200 performs the anti-freezing operation assist operation without performing the temperature adjustment, the temperature comfort of blown air blown by the heat-exchange ventilation apparatus 100 is significantly improved, and a user immediately below the indoor outlet 105 of the heat-exchange ventilation apparatus 100 is not given a sense of discomfort.

Further, performing the anti-freezing operation assist operation can prevent temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users. Furthermore, the air-conditioning apparatus 200 can reduce the number of times the temperature adjustment is turned on and off, and thus can also reduce power consumption in the outdoor unit 203 of the air-conditioning apparatus 200.

Moreover, the deflector unit 230 "nearest to the indoor inlet of the heat-exchange ventilation apparatus" and the deflector units 230 "not nearest to the indoor inlet of the heat-exchange ventilation apparatus" can be controlled independently of each other. Consequently, even when the anti-freezing operation assist operation is "on", the output of the deflector units 230 "not nearest to the indoor inlet of the heat-exchange ventilation apparatus" is kept downward at a control value, so that temperature comfort for users located in the area to be air-conditioned by the deflector units 230 "not nearest to the indoor inlet of the heat-exchange ventilation apparatus" can be maintained even when the anti-freezing operation assist operation is "on".

Further, during the anti-freezing operation assist operation of the air-conditioning apparatus 200, the deflector unit 230 nearest to the indoor inlet 104 of the heat-exchange ventilation apparatus 100 is brought into a state along the horizontal direction, generating an air current in the space to be ventilated 50, so that the effect of eliminating temperature nonuniformity and humidity nonuniformity in the space to be ventilated 50 can also be obtained.

Note that when the air-conditioning apparatus 200 determines whether or not to perform the anti-freezing operation assist operation, temperature nonuniformity or humidity nonuniformity does not need to occur in the space to be ventilated 50. In the ventilation and air-conditioning system 1000 according to the first embodiment, even if there is no temperature nonuniformity or humidity nonuniformity in the space to be ventilated 50, the air-conditioning apparatus 200 performs the anti-freezing operation assist operation after considering a balance between the temperature comfort of the area to be air-conditioned and the prevention of freezing in the heat-exchange element 140 of the heat-exchange ventilation apparatus 100.

<Modifications>

The following describes modifications of the determination of the blowing fan output, the deflector unit output, and the temperature adjustment capability by the indoor unit control unit 215 of the air-conditioning apparatus 200. A user may be able to set in advance which one of the determination result patterns is followed to operate the air-conditioning apparatus 200 from a function setting switch (not illustrated) provided to the ventilation controller 101, the air-conditioning controller 201, the system controller 300, or the heat-exchange ventilation unit 102, a function setting switch (not illustrated) provided to the indoor unit 202, or the like.

In FIG. 5, for the portions where the blowing fan output is "low" when the anti-freezing operation assist operation is "on", a case is assumed where the distance from the deflector unit 230 of the air-conditioning apparatus 200 to the indoor inlet 104 of the heat-exchange ventilation apparatus 100 is short, and air blown from the air-conditioning apparatus 200 cannot be efficiently drawn in in high volume. Thus, in accordance with the distance from the deflector unit 230 of the air-conditioning apparatus 200 to the indoor inlet 104 of the heat-exchange ventilation apparatus 100, the blowing fan output may be set to "high" or "medium" in terms of an air volume at which air blown from the air-conditioning apparatus 200 is efficiently drawn into the heat-exchange ventilation apparatus 100. That is, the blowing fan output of the air-conditioning apparatus 200 when the anti-freezing operation assist operation is "on" can be appropriately changed from an air volume control value set from the air-conditioning controller 201 or the system controller 300.

Further, considering energy saving performance, the operation may be performed so as not to increase the air volume from the control value, or at a minimum air volume regardless of the control value. By setting the air volume of the air-conditioning apparatus 200 to the minimum air volume, the temperature exchange efficiency in the heat exchanger of the air-conditioning apparatus 200 is enhanced, so that the temperature of air blown from the air-conditioning apparatus 200 can be further increased, resulting in a further improvement in the anti-freezing effect in the heat-exchange element 140 of the heat-exchange ventilation apparatus 100.

When the anti-freezing operation assist operation is "on", the deflector unit output nearest to the indoor inlet 104 is set to "horizontal". However, if the deflector unit 230 can also adjust the wind direction to the right and left, air blown from the air-conditioning apparatus 200 may be adjusted to be able to be blown to the indoor inlet 104 of the heat-exchange ventilation apparatus 100. This allows air blown from the air-conditioning apparatus 200 to be more efficiently drawn into the heat-exchange ventilation apparatus 100, and thus can improve the anti-freezing effect in the heat-exchange element 140 of the heat-exchange ventilation apparatus 100.

For the heat-exchange ventilation apparatus 100 of a so-called one-way-blowing ceiling cassette type or the like, the indoor inlet 104 and the indoor outlet 105 may be very close to each other. In such a case, when the anti-freezing operation assist operation is "on", the deflector unit output nearest to the indoor inlet 104 is adjusted in the left and right wind direction so as not to linearly blow toward the indoor inlet 104 of the heat-exchange ventilation apparatus 100 but to be shifted at an angle in a direction away from the indoor outlet 105. This can improve the anti-freezing effect in the heat-exchange element 140 of the heat-exchange ventilation apparatus 100 without air blown from the air-conditioning apparatus 200 disturbing an air current blown from the heat-exchange ventilation apparatus 100, in other words, without impairing the comfort of users located in the space to be ventilated 50.

The angle at which the left and right wind direction of air blown from the air-conditioning apparatus 200 is shifted in the left and right direction may be appropriately adjusted according to the distance between the air-conditioning apparatus 200 and the heat-exchange ventilation apparatus 100. Further, if an outlet of another apparatus is located between the indoor outlet 205A, 205B, 205C, or 205D of the air-conditioning apparatus 200 and the indoor inlet 104 of the heat-exchange ventilation apparatus 100, the right and left wind direction may be likewise adjusted as appropriate so as not to disturb a blown air current.

When the operation mode is "stop", and the anti-freezing operation assist operation is "on", the deflector unit output not nearest to the indoor inlet 104 is set to "closed" because there is no need to blow air. However, if air is blown in the "horizontal" direction or the like, the effect of improving the anti-freezing effect in the heat-exchange element 140 of the heat-exchange ventilation apparatus 100 can be obtained without giving a sense of discomfort of being hit by blown air to users located in the area to be air-conditioned.

In FIG. 5, for the temperature adjustment control, when the operation mode is "stop", and the anti-freezing operation assist operation is "on", as the "anti-freezing operation assist request level" increases in the order of "low", "medium", and "high", the corresponding temperature adjustment control is changed in the order of "off", "on at 50%", and "on at 100%", to enhance the effect of improving the anti-freezing effect in the heat-exchange element 140 of the heat-exchange ventilation apparatus 100. On the other hand, in the case where the anti-freezing effect in the heat-exchange element 140 of the heat-exchange ventilation apparatus 100 is given the highest priority, when the "anti-freezing operation assist request level" increases in the order of "low", "medium", and "high", the corresponding temperature adjustment control may be set to "on at 100%", "on at 100%", and "on at 100%". Further, considering energy saving performance, when the "anti-freezing operation assist request level" is "low", "medium", or "high", the corresponding temperature adjustment control may be set to "off", "off", or "on at 50%", or "off", "off", or "off". When the blowing fan 220 is operated, and the deflector unit output nearest to the indoor inlet 104 is set to "horizontal", the effect of improving the anti-freezing effect in the heat-exchange element 140 of the heat-exchange ventilation apparatus 100 can be obtained using warm air accumulated in the vicinity of the ceiling.

When the air-conditioning apparatus 200 that has been stopped operates to perform the anti-freezing operation assist operation while the operation mode is "stop", users may feel a sense of discomfort. Therefore, when the operation mode of the air-conditioning apparatus 200 is "stop", the air-conditioning apparatus 200 need not perform the anti-freezing operation assist operation in the first place or may perform the anti-freezing operation assist operation only when the anti-freezing operation assist request level is "high".

When the operation mode is "cooling", the anti-freezing operation assist operation is set to "off". However, when the area to be air-conditioned by the air-conditioning apparatus 200 is "comfortable", the temperature adjustment is turned "off", so that the heat-exchange ventilation apparatus 100 does not draw in air cooled by the air-conditioning apparatus 200. Thus, the anti-freezing operation assist operation may be performed using warm air accumulated in the vicinity of the ceiling. In this case, the indoor unit control unit 215 sets the anti-freezing operation assist operation to "on" by setting the blowing fan output to "low", the deflector unit output nearest to the indoor inlet 104 to "horizontal", the deflector unit output not nearest to the indoor inlet 104 to a "control value", and the temperature adjustment to "off".

Further, by performing the temperature adjustment control after automatically switching the operation mode of the air-conditioning apparatus 200 from "cooling" to "heating", air further warmed by the temperature adjustment by "heating" can be drawn into the heat-exchange ventilation apparatus 100. In this case, the indoor unit control unit 215 sets the anti-freezing operation assist operation to "on" by setting the blowing fan output to "low", the deflector unit output nearest to the indoor inlet 104 to "horizontal", the deflector unit output not nearest to the indoor inlet 104 to "closed", and the temperature adjustment to "on".

The anti-freezing operation assist operation in this case is an assist operation in which the anti-freezing effect in the heat-exchange element 140 of the heat-exchange ventilation apparatus 100 is further improved by the temperature adjustment. When the operation mode of the air-conditioning apparatus 200 is automatically switched from "cooling" to "heating", since the user operation is originally in the "cooling" mode, the deflector unit output not nearest to the indoor inlet 104 is set to "closed" so that "warm air", instead of "cool air" desired by users, does not hit the users.

Even in a case such as in an office during winter months in which cooling operation is performed due to an increase in indoor temperature caused by heat generation of office automation equipment, when the outdoor temperature is significantly low, and there is a probability of freezing rapidly occurring in a large portion of the heat-exchange element 140 of the heat-exchange ventilation apparatus 100, the improvement of the anti-freezing effect in the heat-exchange element 140 of the heat-exchange ventilation apparatus 100 is prioritized over the temperature comfort of the area to be air-conditioned. However, if the temperature comfort of the area to be air-conditioned is impaired to an uncomfortable level, and if the "duration of non-attainment of the set temperature" has become equal to or more than the predetermined threshold time, the improvement of the temperature comfort of the area to be air-conditioned can be prioritized again over the prevention of freezing in the heat-exchange element 140 of the heat-exchange ventilation apparatus 100. In other words, the indoor unit control unit 215 causes the anti-freezing operation assist operation to be performed after considering a balance between the temperature comfort of the area to be air-conditioned and the prevention of freezing in the heat-exchange element 140 of the heat-exchange ventilation apparatus 100.

At this time, since the deflector units 230 are set to "horizontal" or "closed" in all directions, warm air present in the vicinity of the ceiling can be further increased in temperature by the temperature adjustment by heating and then drawn into the heat-exchange ventilation apparatus 100 without giving users located in the area to be air-conditioned a sense of discomfort caused by the hitting of blown air. Consequently, compared to the case where the air-conditioning apparatus 200 performs the anti-freezing operation assist operation without performing the temperature adjustment, the anti-freezing effect in the heat-exchange element 140 of the heat-exchange ventilation apparatus 100 is significantly improved. Furthermore, since the blown air does not directly hit the users, it is also possible to make air heated to a temperature that the users will feel too hot when the air blows into the area to be air-conditioned, drawn into the heat-exchange ventilation apparatus 100.

In the ventilation and air-conditioning system 1000 according to the first embodiment, the air-conditioning apparatus 200 appropriately performs the anti-freezing operation assist operation, based on the operation mode of the air-conditioning apparatus 200, the anti-freezing operation assist request level, the difference between the indoor temperature of the area to be air-conditioned detected by the air-conditioning apparatus 200 and the set temperature, and the time during which the indoor temperature of the area to be air-conditioned detected by the air-conditioning apparatus 200 has not reached the set temperature. However, if there are at least two pieces of information of the operation mode of the air-conditioning apparatus 200 and the anti-freezing operation assist request level, the air-conditioning apparatus 200 can determine whether or not to perform the anti-freezing operation assist operation. This allows the air-conditioning apparatus 200 to avoid unnecessarily performing the anti-freezing operation assist operation.

In the ventilation and air-conditioning system 1000 according to the first embodiment, the heat-exchange ventilation apparatus 100 determines the anti-freezing operation assist request level, but the air-conditioning apparatus 200 or the system controller 300 may determine the anti-freezing operation assist request level. Specifically, if the air-conditioning apparatus 200 determines the anti-freezing operation assist request level, the air-conditioning apparatus 200 may acquire information on the start/stop status of the heat-exchange ventilation apparatus 100 and the exhaust temperature of the heat-exchange ventilation apparatus 100 from the heat-exchange ventilation apparatus 100 via the system communication unit 212, to determine the anti-freezing operation assist request level.

If the system controller 300 determines the anti-freezing operation assist request level, the system controller 300 may acquire information on the start/stop status of the heat-exchange ventilation apparatus 100 and the exhaust temperature of the heat-exchange ventilation apparatus 100 from the heat-exchange ventilation apparatus 100 via the system communication unit 212, to determine the anti-freezing operation assist request level. Then, the system controller 300 can transmit the determination result to the air-conditioning apparatus 200.

In the ventilation and air-conditioning system 1000 according to the first embodiment, the air-conditioning apparatus 200 determines whether or not to perform the anti-freezing operation assist operation, but the heat-exchange ventilation apparatus 100 or the system controller 300 may determine whether or not to perform the anti-freezing operation assist operation. Specifically, if the heat-exchange ventilation apparatus 100 determines whether or not to perform the anti-freezing operation assist operation, the heat-exchange ventilation apparatus 100 may acquire the operation mode of the air-conditioning apparatus 200, the indoor temperature of the area to be air-conditioned detected by the air-conditioning apparatus 200, and the set temperature of the air-conditioning apparatus 200 via the system communication unit 112, to determine the contents of the anti-freezing operation assist operation. Then, the heat-exchange ventilation apparatus 100 may transmit the determination results to the air-conditioning apparatus 200.

If the system controller 300 determines whether or not to perform the anti-freezing operation assist operation, the system controller 300 may acquire the anti-freezing operation assist request level from the heat-exchange ventilation apparatus 100, and acquire the operation mode of the air-conditioning apparatus 200, the indoor temperature of the area to be air-conditioned detected by the air-conditioning apparatus 200, and the set temperature of the air-conditioning apparatus 200 from the air-conditioning apparatus 200, to determine the contents of the anti-freezing operation assist operation. Then, the system controller 300 may transmit the determination results to the air-conditioning apparatus 200.

As described above, in the ventilation and air-conditioning system 1000 according to the first embodiment, the heat-exchange ventilation apparatus 100 determines the anti-freezing operation assist request level, based on the start/stop status of the heat-exchange ventilation apparatus 100 and the exhaust temperature of the heat-exchange ventilation apparatus 100. When the exhaust temperature of the heat-exchange ventilation apparatus 100 is maintained in the predetermined range of temperatures for the predetermined threshold time, the heat-exchange ventilation apparatus 100 controls at least one of the air supply fan 120 and the air exhaust fan 130 such that the supply air volume of the heat-exchange ventilation apparatus 100 becomes smaller than the exhaust air volume of the heat-exchange ventilation apparatus 100, to prevent freezing of the heat-exchange element 140.

The air-conditioning apparatus 200 appropriately performs the anti-freezing operation assist operation, based on the operation mode of the air-conditioning apparatus 200, the anti-freezing operation assist request level, the difference between the indoor temperature detected by the air-conditioning apparatus 200 and the set temperature, and the time during which the indoor temperature detected by the air-conditioning apparatus 200 has not reached the set temperature.

When the air-conditioning apparatus 200 performs the anti-freezing operation assist operation, the exhaust temperature of the heat-exchange ventilation apparatus 100 is increased. Thus, as the anti-freezing operation assist request level determined by the heat-exchange ventilation apparatus 100 is reduced, the time to turn "off" the air supply fan output associated with the "duration of exhaust temperature decrease" is shortened, or it becomes unnecessary to turn "off" the air supply fan output. In other words, the air-conditioning apparatus 200 performing the anti-freezing operation assist operation can also prevent or limit a decrease in ventilation volume while preventing freezing of the heat-exchange element 140 of the heat-exchange ventilation apparatus 100.

Even when the air-conditioning apparatus 200 does not perform the anti-freezing operation assist operation, the heat-exchange ventilation apparatus 100 can control at least one of the air supply fan 120 and the air exhaust fan 130 such that the supply air volume of the heat-exchange ventilation apparatus 100 becomes smaller than the exhaust air volume of the heat-exchange ventilation apparatus 100, according to the "duration of exhaust temperature decrease", and thus can prevent freezing in the heat-exchange element 140.

In other words, the ventilation and air-conditioning system 1000 can improve the anti-freezing effect in the heat-exchange element 140 of the heat-exchange ventilation apparatus 100 and prevent or limit a decrease in ventilation volume due to the anti-freezing operation of the heat-exchange ventilation apparatus 100 after considering a balance between the temperature comfort of the area to be air-conditioned by the air-conditioning apparatus 200 and the prevention of freezing in the heat-exchange element 140 of the heat-exchange ventilation apparatus 100.

Further, in the ventilation and air-conditioning system 1000, the air-conditioning apparatus 200 performs the anti-freezing operation assist operation, so that the heat-exchange ventilation apparatus 100 blows air improved in temperature comfort, not giving a sense of discomfort associated with cold air to a user immediately below the indoor outlet 105 of the heat-exchange ventilation apparatus 100.

Furthermore, the ventilation and air-conditioning system 1000 can prevent occurrence of temperature variations in the space to be ventilated 50 and temperature nonuniformity in the space to be ventilated 50 due to the inflow of cold air blown from the heat-exchange ventilation apparatus 100 into the space to be ventilated 50, so that a sense of discomfort associated with temperature variations in the space to be ventilated 50 and a sense of discomfort associated with temperature nonuniformity in the space to be ventilated 50 are not given to users.

In the ventilation and air-conditioning system 1000, the air-conditioning apparatus 200 can reduce the number of times the temperature adjustment is turned on and off, and thus can also reduce power consumption in the outdoor unit 203 of the air-conditioning apparatus 200.

In the ventilation and air-conditioning system 1000, the air-conditioning apparatus 200 independently controls the deflector unit 230 nearest to the indoor inlet 104 of the heat-exchange ventilation apparatus 100 and the deflector units 230 not nearest to the indoor inlet 104 of the heat-exchange ventilation apparatus 100. Consequently, in the ventilation and air-conditioning system 1000, on the area to be air-conditioned other than the indoor inlet 104 of the heat-exchange ventilation apparatus 100, operation that always gives priority to temperature comfort can be performed, regardless of the anti-freezing operation assist operation.

As described above, the ventilation and air-conditioning system 1000 according to the first embodiment has the effects of being able to prevent or limit a decrease in ventilation volume and provide enough ventilation volume while preventing freezing in the heat-exchange element 140 of the heat-exchange ventilation apparatus 100, even when the outdoor temperature is low.

Second Embodiment.

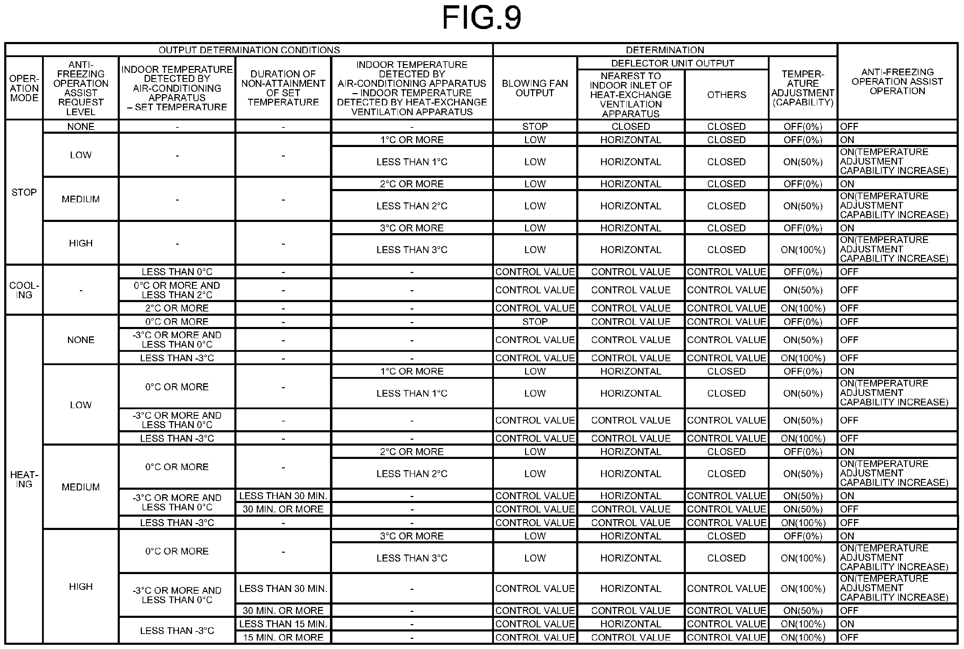

FIG. 9 is a diagram illustrating an example of determination of blowing fan output, deflector unit output, and temperature adjustment capability by an indoor unit control unit of an air-conditioning apparatus in a ventilation and air-conditioning system according to a second embodiment of the present invention. Note that items not specifically described are similar to those in the first embodiment, and the same functions and configurations will be described using the same reference numerals. The same functions and configurations as those of the first embodiment will not be explained.

A ventilation and air-conditioning system 2000 according to the second embodiment is different from the ventilation and air-conditioning system 1000 according to the first embodiment in that the indoor unit control unit 215 of the air-conditioning apparatus 200 determines the temperature adjustment capability in the anti-freezing operation assist operation, additionally using information on the difference between the indoor temperature detected by the air-conditioning apparatus 200 and the indoor temperature detected by the heat-exchange ventilation apparatus 100. Thus, the functions and configurations in the ventilation and air-conditioning system 2000 according to the second embodiment other than those of the indoor unit control unit 215 of the air-conditioning apparatus 200 are the same as those in the ventilation and air-conditioning system 1000 according to the first embodiment.

In the ventilation and air-conditioning system 1000 according to the first embodiment, when the anti-freezing operation assist request level is "provided" while the operation mode of the air-conditioning apparatus 200 is "stop" or while the indoor temperature detected by the air-conditioning apparatus 200 has reached the set temperature, the anti-freezing operation assist operation is performed with the temperature adjustment switched to "on". A case where the indoor temperature detected by the air-conditioning apparatus 200 has reached the set temperature is a case where the "indoor temperature detected by the air-conditioning apparatus - the set temperature" is 0°C or more. However, when the difference between the indoor temperature detected by the air-conditioning apparatus 200 and the indoor temperature detected by the heat-exchange ventilation apparatus 100 is equal to or more than a predetermined threshold temperature, the anti-freezing effect in the heat-exchange element 140 of the heat-exchange ventilation apparatus 100 can be expected even using warm air accumulated in the vicinity of the ceiling of the air-conditioning apparatus 200.

The threshold temperature here is the threshold of the difference between the indoor temperature detected by the air-conditioning apparatus 200 and the indoor temperature detected by the heat-exchange ventilation apparatus 100, for the indoor unit control unit 215 of the air-conditioning apparatus 200 to determine whether or not to turn on the temperature adjustment of the air-conditioning apparatus 200.

Thus, the ventilation and air-conditioning system 2000 according to the second embodiment performs the anti-freezing operation assist operation with the temperature adjustment remaining "off". On the other hand, when the difference between the indoor temperature detected by the air-conditioning apparatus 200 and the indoor temperature detected by the heat-exchange ventilation apparatus 100 is less than the predetermined threshold temperature, the temperature of air accumulated in the vicinity of the ceiling near the air-conditioning apparatus 200 is adjusted to positively increase the temperature of air to be drawn in by the heat-exchange ventilation apparatus 100 to enhance the anti-freezing effect in the heat-exchange element 140 of the heat-exchange ventilation apparatus 100. This allows the ventilation and air-conditioning system 2000 to perform the anti-freezing operation assist operation while limiting the execution of the anti-freezing operation assist operation in cases where the temperature adjustment of the air-conditioning apparatus 200 is turned "on", thus allowing an improvement in the anti-freezing effect in the heat-exchange element 140 of the heat-exchange ventilation apparatus 100 with more energy savings.

When the anti-freezing operation assist request level is increased, it is necessary to further improve the anti-freezing effect in the heat-exchange element 140 of the heat-exchange ventilation apparatus 100. Thus, the threshold to determine whether to turn on or off the temperature adjustment is changed such that the temperature adjustment of the air-conditioning apparatus 200 is more easily turned on.

The example illustrated in FIG. 9 will be specifically described. First, a case where the operation mode is "stop" and the anti-freezing operation assist request level is "low" will be described. When the "indoor temperature detected by the air-conditioning apparatus - the indoor temperature detected by the heat-exchange ventilation apparatus", which is the difference between the indoor temperature detected by the air-conditioning apparatus 200 and the indoor temperature detected by the heat-exchange ventilation apparatus 100, is "1°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 1°C", the indoor unit control unit 215 sets the temperature adjustment to "on at 50%" and sets the anti-freezing operation assist operation to "on".

A case where the operation mode is "stop" and the anti-freezing operation assist request level is "medium" will be described. When the "indoor temperature detected by the air-conditioning apparatus - the indoor temperature detected by the heat-exchange ventilation apparatus" is "2°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 2°C", the indoor unit control unit 215 sets the temperature adjustment to "on at 50%" and sets the anti-freezing operation assist operation to "on".

A case where the operation mode is "stop" and the anti-freezing operation assist request level is "high" will be described. When the "indoor temperature detected by the air-conditioning apparatus - the indoor temperature detected by the heat-exchange ventilation apparatus" is "3°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 3°C", the indoor unit control unit 215 sets the temperature adjustment to "on at 100%" and sets the anti-freezing operation assist operation to "on".

Next, cases where the operation mode is "heating" will be described. A case where the operation mode is "heating", the anti-freezing operation assist request level is "low", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "1°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 1°C", the indoor unit control unit 215 sets the temperature adjustment to "on at 50%" and sets the anti-freezing operation assist operation to "on".

A case where the operation mode is "heating", the anti-freezing operation assist request level is "medium", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "2°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 2°C", the indoor unit control unit 215 sets the temperature adjustment to "on at 50%" and sets the anti-freezing operation assist operation to "on".

A case where the operation mode is "heating", the anti-freezing operation assist request level is "high", and the "indoor temperature detected by the air-conditioning apparatus - the set temperature" is "0°C or more" will be described. When the "indoor temperature detected by the air-conditioning apparatus - the indoor temperature detected by the heat-exchange ventilation apparatus" is "3°C or more", the indoor unit control unit 215 sets the temperature adjustment to "off" and sets the anti-freezing operation assist operation to "on". On the other hand, when the "indoor temperature detected by the air-conditioning apparatus - the indoor temperature detected by the heat-exchange ventilation apparatus" is "less than 3°C", the indoor unit control unit 215 sets the temperature adjustment to "on at 100%" and sets the anti-freezing operation assist operation to "on".

FIG. 9 is the same as FIG. 5 except for the above-described determination.

<Modifications>

When the anti-freezing operation assist request level is high, the outdoor temperature is low, and there is a probability of freezing rapidly occurring in a large portion of the heat-exchange element 140 in the heat-exchange ventilation apparatus 100, and the air-conditioning apparatus 200 needs to further increase the priority of the anti-freezing operation assist operation. Therefore, in the ventilation and air-conditioning system 2000 according to the second embodiment, when the anti-freezing operation assist request level is high, the threshold temperature to determine whether or not to turn on the temperature adjustment of the air-conditioning apparatus 200 is changed such that the temperature adjustment of the air-conditioning apparatus 200 is more easily turned on. However, the threshold temperature to determine whether or not to turn on the temperature adjustment may be fixed regardless of the anti-freezing operation assist request level.

For example, when the threshold temperature to determine whether or not to turn on the temperature adjustment of the air-conditioning apparatus 200 is fixed to 1°C, the ventilation and air-conditioning system 2000 can continue the anti-freezing operation assist operation with the temperature adjustment of the air-conditioning apparatus 200 "off" until the difference between the indoor temperature detected by the air-conditioning apparatus 200 and the indoor temperature detected by the heat-exchange ventilation apparatus 100 becomes less than 1°C, and thus can reduce power consumption.

When the threshold temperature to determine whether or not to turn on the temperature adjustment of the air-conditioning apparatus 200 is fixed to 3°C, the ventilation and air-conditioning system 2000 performs the anti-freezing operation assist operation with the temperature adjustment of the air-conditioning apparatus 200 on when the difference between the indoor temperature detected by the air-conditioning apparatus 200 and the indoor temperature detected by the heat-exchange ventilation apparatus 100 becomes less than 3°C. Consequently, the ventilation and air-conditioning system 2000 can warm air accumulated in the vicinity of the ceiling to positively raise the temperature of air to be drawn in by the heat-exchange ventilation apparatus 100 to further enhance the anti-freezing effect in the heat-exchange element 140 of the heat-exchange ventilation apparatus 100.

Like the ventilation and air-conditioning system 1000 according to the first embodiment, the ventilation and air-conditioning system 2000 according to the above-described second embodiment has the effects of being able to improve the anti-freezing effect in the heat-exchange element 140 of the heat-exchange ventilation apparatus 100 and to prevent or limit a decrease in ventilation volume due to the anti-freezing operation of the heat-exchange ventilation apparatus 100.

The ventilation and air-conditioning system 2000 according to the second embodiment adds the information on the difference between the indoor temperature detected by the air-conditioning apparatus 200 and the indoor temperature detected by the heat-exchange ventilation apparatus 100 to the determination criteria for the temperature adjustment in the ventilation and air-conditioning system 1000 according to the first embodiment described above, to determine whether or not to turn on the temperature adjustment at the time of the anti-freezing operation assist operation. That is, in the ventilation and air-conditioning system 2000, the air-conditioning apparatus 200 determines whether or not to turn on the temperature adjustment at the time of the anti-freezing operation assist operation, based also on the difference between the indoor temperature detected by the air-conditioning apparatus 200 and the indoor temperature detected by the heat-exchange ventilation apparatus 100. Consequently, the ventilation and air-conditioning system 2000 can reduce the switching of the temperature adjustment from "off" to "on" for the anti-freezing operation assist operation. That is, the ventilation and air-conditioning system 2000 can improve the anti-freezing effect in the heat-exchange element 140 of the heat-exchange ventilation apparatus 100 with more energy savings.

Third Embodiment.

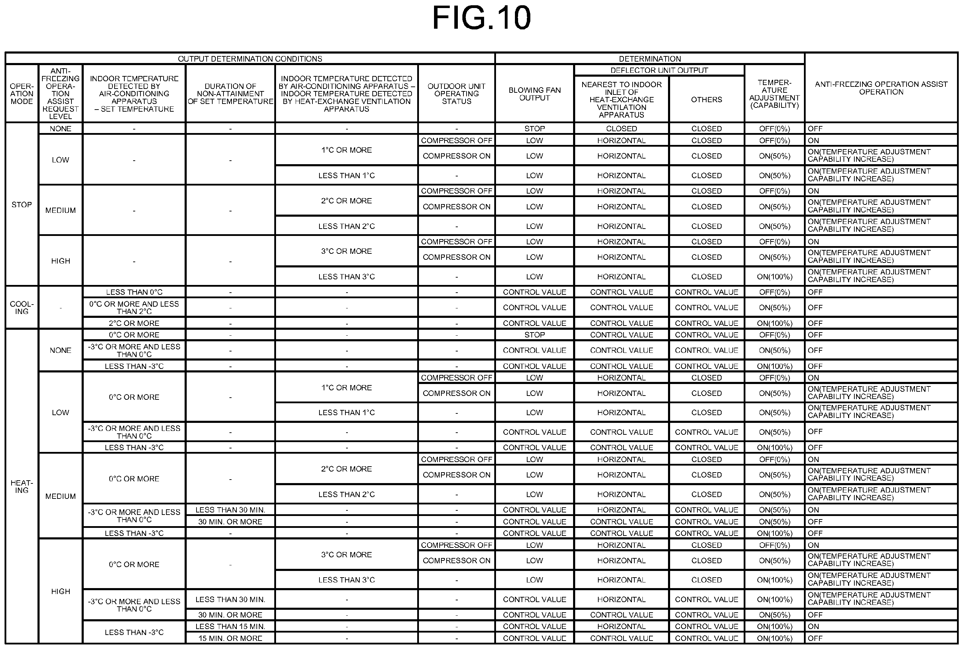

FIG. 10 is a diagram illustrating an example of determination of blowing fan output, deflector unit output, and temperature adjustment capability by an indoor unit control unit of an air-conditioning apparatus in a ventilation and air-conditioning system according to a third embodiment of the present invention. Note that items not specifically described are similar to those in the second embodiment, and the same functions and configurations will be described using the same reference numerals. The same functions and configurations as those of the second embodiment will not be explained.

A ventilation and air-conditioning system 3000 according to the third embodiment is different from the ventilation and air-conditioning system 2000 according to the second embodiment in that the indoor unit control unit 215 of the air-conditioning apparatus 200 determines the temperature adjustment capability in the anti-freezing operation assist operation, additionally using information on the operating status of the outdoor unit 203 of the air-conditioning apparatus 200. Thus, the functions and configurations in the ventilation and air-conditioning system 3000 according to the third embodiment other than those of the indoor unit control unit 215 of the air-conditioning apparatus 200 are the same as those in the ventilation and air-conditioning system 2000 according to the second embodiment.

In the ventilation and air-conditioning system 2000 according to the above-described second embodiment, when the anti-freezing operation assist request level is "provided", if the difference between the indoor temperature detected by the air-conditioning apparatus 200 and the indoor temperature detected by the heat-exchange ventilation apparatus 100 is equal to or more than the predetermined threshold temperature, the anti-freezing effect in the heat-exchange element 140 of the heat-exchange ventilation apparatus 100 can be expected using warm air accumulated in the vicinity of the ceiling. Thus, the ventilation and air-conditioning system 2000 performs the anti-freezing operation assist operation with the temperature adjustment of the air-conditioning apparatus 200 remaining "off". When the difference between the indoor temperature detected by the air-conditioning apparatus 200 and the indoor temperature detected by the heat-exchange ventilation apparatus 100 is less than the predetermined threshold temperature, the ventilation and air-conditioning system 2000 according to the above-described second embodiment can adjust the temperature of air accumulated in the vicinity of the ceiling to positively increase the temperature of air to be drawn in by the heat-exchange ventilation apparatus 100 to improve the anti-freezing effect in the heat-exchange element 140 of the heat-exchange ventilation apparatus 100.

However, assuming a ventilation and air-conditioning system in which a plurality of air-conditioning apparatuses 200 are connected to a single outdoor unit 203, even when the temperature adjustment of one of the air-conditioning apparatuses 200 is "off", there can be a "compressor on" state in which the compressor 271 of the connected outdoor unit 203 is on, depending on the temperature adjustment status of another air-conditioning apparatus 200.

Therefore, even when the difference between the indoor temperature detected by the air-conditioning apparatus 200 and the indoor temperature detected by the heat-exchange ventilation apparatus 100 is equal to or more than the predetermined threshold temperature, if the operating status of the outdoor unit 203 is "compressor on", the ventilation and air-conditioning system 3000 according to the third embodiment can further adjust the temperature of air accumulated in the vicinity of the ceiling to positively raise the temperature of air to be drawn in by the heat-exchange ventilation apparatus 100 to improve the anti-freezing effect in the heat-exchange element 140 of the heat-exchange ventilation apparatus 100.

On the other hand, if the operating status of the outdoor unit 203 is "compressor off", the ventilation and air-conditioning system 3000 can use already warm air accumulated in the vicinity of the ceiling to improve the anti-freezing effect in the heat-exchange element 140 of the heat-exchange ventilation apparatus 100, without forcibly restarting the outdoor unit 203.

Thus, even when the difference between the indoor temperature detected by the air-conditioning apparatus 200 and the indoor temperature detected by the heat-exchange ventilation apparatus 100 is equal to or more than the threshold temperature, the ventilation and air-conditioning system 3000 can quickly improve the anti-freezing effect in the heat-exchange element 140 of the heat-exchange ventilation apparatus 100 by further warming air in the vicinity of the ceiling positively without causing a large increase in power consumption accompanying the restarting of the outdoor unit 203.

When the difference between the indoor temperature detected by the air-conditioning apparatus 200 and the indoor temperature detected by the heat-exchange ventilation apparatus 100 is equal to or more than the threshold temperature, the temperature of air accumulated in the vicinity of the ceiling is high in the first place. Thus, when the difference between the indoor temperature detected by the air-conditioning apparatus 200 and the indoor temperature detected by the heat-exchange ventilation apparatus 100 is equal to more than the threshold temperature, the ventilation and air-conditioning system 3000 sets the temperature adjustment capability to "on at 50%" even when the temperature adjustment is turned on at the time of the anti-freezing operation assist operation, thereby reducing an increase in the power consumption of the entire ventilation and air-conditioning system 3000 to the bare minimum.

The example illustrated in FIG. 10 will be specifically described. The indoor unit control unit 215 of the air-conditioning apparatus 200 acquires information on the operating status of the outdoor unit 203 via the outdoor unit communication unit 213.

First, a case will be described where the operation mode is "stop", the anti-freezing operation assist request level is "low", and the "indoor temperature detected by the air-conditioning apparatus - the indoor temperature detected by the heat-exchange ventilation apparatus", which is the difference between the indoor temperature detected by the air-conditioning apparatus 200 and the indoor temperature detected by the heat-exchange ventilation apparatus 100, is "1°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

A case will be described where the operation mode is "stop", the anti-freezing operation assist request level is "medium", and the "indoor temperature detected by the air-conditioning apparatus - the indoor temperature detected by the heat-exchange ventilation apparatus" is "2°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

A case will be described where the operation mode is "stop", the anti-freezing operation assist request level is "high", and the "indoor temperature detected by the air-conditioning apparatus - the indoor temperature detected by the heat-exchange ventilation apparatus" is "3°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

Next, cases where the operation mode is "heating" will be described. A case will be described where the operation mode is "heating", the anti-freezing operation assist request level is "low", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "1°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

A case will be described where the operation mode is "heating", the anti-freezing operation assist request level is "medium", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "2°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

A case will be described where the operation mode is "heating", the anti-freezing operation assist request level is "high", the "indoor temperature detected by the air-conditioning apparatus - the set temperature" is "0°C or more", and the "indoor temperature detected by the air-conditioning apparatus - the indoor temperature detected by the heat-exchange ventilation apparatus" is "3°C or more". When the operating status of the outdoor unit 203 is "compressor off", the indoor unit control unit 215 sets the temperature adjustment to "off" and sets the anti-freezing operation assist operation to "on". On the other hand, when the operating status of the outdoor unit 203 is "compressor on", the indoor unit control unit 215 sets the temperature adjustment to "on at 50%" and sets the anti-freezing operation assist operation to "on".

FIG. 10 is the same as FIG. 9 except for the above determination.

<Modifications>

In the ventilation and air-conditioning system 3000 according to the third embodiment, the air-conditioning apparatus 200 determines on or off of the temperature adjustment, based on the operating status of the outdoor unit 203, that is, on or off of the compressor 271. However, the temperature adjustment capability of the air-conditioning apparatus 200 may be determined more finely from the relationship between the operating frequency of the compressor 271 and the energy efficiency of the compressor 271 in the outdoor unit 203.

Specifically, the indoor unit control unit 215 of the air-conditioning apparatus 200 acquires, from the outdoor unit 203, information on the current operating frequency of the compressor 271 and information on the operating frequency of the compressor 271 at which the energy efficiency of the compressor 271 is maximized. The indoor unit control unit 215 performs control to turn on the temperature adjustment when the energy efficiency of the compressor 271 is increased by turning on the temperature adjustment. On the other hand, when the energy efficiency of the compressor 271 is decreased by turning on the temperature adjustment, the indoor unit control unit 215 performs control to turn on the temperature adjustment if the energy efficiency of the compressor 271 becomes equal to or more than a predetermined threshold by turning on the temperature adjustment, and to turn off the temperature adjustment if the energy efficiency of the compressor 271 becomes less than the threshold by turning on the temperature adjustment.

Furthermore, in the third embodiment, the temperature adjustment capability when the temperature adjustment is on has two values of 50% and 100%. However, if the temperature adjustment capability can be set more finely, the temperature adjustment capability may be adjusted more finely for adjustment to make the energy efficiency fall within a specified range. This allows the anti-freezing operation assist operation to be performed based on the energy efficiency of the compressor 271 of the outdoor unit 203, allowing reduction of an increase in the power consumption of the entire ventilation and air-conditioning system 3000 to the bare minimum.

In the ventilation and air-conditioning system 3000 according to the third embodiment, the air-conditioning apparatus 200 determines whether or not to turn on the temperature adjustment, using the difference between the indoor temperature detected by the air-conditioning apparatus 200 and the indoor temperature detected by the heat-exchange ventilation apparatus 100. However, if the temperature adjustment capability is determined without using information on the difference between the indoor temperature detected by the air-conditioning apparatus 200 and the indoor temperature detected by the heat-exchange ventilation apparatus 100, the ventilation and air-conditioning system 3000 can obtain the effect when whether or not to turn on the temperature adjustment is determined based on the operating status of the outdoor unit 203 connected to the indoor unit 202 at the time of the anti-freezing operation assist operation, as described above.

Like the ventilation and air-conditioning system 1000 according to the first embodiment, the ventilation and air-conditioning system 3000 according to the above-described third embodiment has the effects of being able to improve the anti-freezing effect in the heat-exchange element 140 of the heat-exchange ventilation apparatus 100 and to prevent or limit a decrease in ventilation volume due to the anti-freezing operation of the heat-exchange ventilation apparatus 100.

The ventilation and air-conditioning system 3000 according to the third embodiment adds the information on the operating status of the outdoor unit 203 of the air-conditioning apparatus 200 to the determination criteria for the temperature adjustment in the ventilation and air-conditioning system 2000 according to the second embodiment described above, to determine whether or not to turn on the temperature adjustment at the time of the anti-freezing operation assist operation. That is, in the ventilation and air-conditioning system 3000, the air-conditioning apparatus 200 determines whether or not to turn on the temperature adjustment at the time of the anti-freezing operation assist operation, based also on the operating status of the outdoor unit 203 connected to the indoor unit 202. Thus, even when the difference between the indoor temperature detected by the air-conditioning apparatus 200 and the indoor temperature detected by the heat-exchange ventilation apparatus 100 is equal to or more than the predetermined threshold temperature, the ventilation and air-conditioning system 3000 can more quickly improve the anti-freezing effect in the heat-exchange element 140 of the heat-exchange ventilation apparatus 100 by further warming air in the vicinity of the ceiling positively without causing a large increase in power consumption accompanying the restarting of the outdoor unit 203.

Fourth Embodiment.

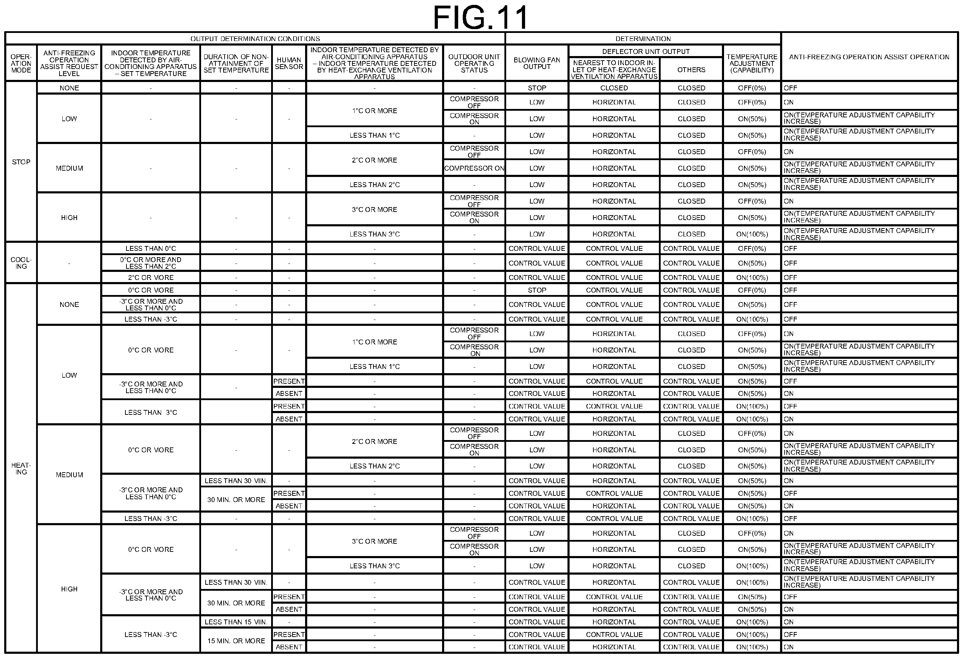

FIG. 11 is a diagram illustrating an example of determination of blowing fan output, deflector unit output, and temperature adjustment capability by an indoor unit control unit of an air-conditioning apparatus in a ventilation and air-conditioning system according to a fourth embodiment of the present invention. Note that items not specifically described are similar to those in the third embodiment, and the same functions and configurations will be described using the same reference numerals. The same functions and configurations as those of the third embodiment will not be explained. "Present" in a human sensor column in FIG. 11 indicates that a human sensor has detected the presence of a person in the area to be air-conditioned by the air-conditioning apparatus 200. "Absent" in the human sensor column in FIG. 11 indicates that the human sensor has not detected the presence of a person in the area to be air-conditioned by the air-conditioning apparatus 200.

A ventilation and air-conditioning system 4000 according to the fourth embodiment is different from the ventilation and air-conditioning system 3000 according to the third embodiment in that the indoor unit control unit 215 of the air-conditioning apparatus 200 determines the temperature adjustment capability in the anti-freezing operation assist operation, based also on the detected condition of the human sensor additionally connected to the air-conditioning apparatus 200. That is, the ventilation and air-conditioning system 4000 determines the temperature adjustment capability in the anti-freezing operation assist operation, based also on the detection result of the human sensor, in addition to the conditions of the operation mode of the air-conditioning apparatus 200, the difference between the indoor temperature detected by the air-conditioning apparatus 200 and the set temperature, the time during which the indoor temperature detected by the air-conditioning apparatus 200 has not reached the set temperature, and the difference between the indoor temperature detected by the air-conditioning apparatus and the indoor temperature detected by the heat-exchange ventilation apparatus.

The human sensor can detect a person present in the area to be air-conditioned by the connected air-conditioning apparatus 200. Assume that the ventilation and air-conditioning system 4000 according to the fourth embodiment can detect whether a person is present in an area to be air-conditioned by each of the four indoor outlets 205A, 205B, 205C, and 205D.

In the ventilation and air-conditioning system 3000 according to the above-described third embodiment, there are output determination conditions for the determination that the improvement of the temperature comfort of the area to be air-conditioned is prioritized over the anti-freezing effect in the heat-exchange element 140 of the heat-exchange ventilation apparatus 100, from the difference between the indoor temperature detected by the air-conditioning apparatus 200 and the set temperature, and the time during which the indoor temperature detected by the air-conditioning apparatus 200 has not reached the set temperature.

The conditions for the determination that the improvement of the temperature comfort of the area to be air-conditioned is prioritized over the anti-freezing effect in the heat-exchange element 140 of the heat-exchange ventilation apparatus 100 are, for example, the case where the operation mode is "heating", the anti-freezing operation assist request level is "low", and the "indoor temperature detected by the air-conditioning apparatus - the set temperature" in the area to be air-conditioned is "-3°C or more and less than 0°C".

In the ventilation and air-conditioning system 4000 according to the fourth embodiment, even under these output determination conditions, the indoor unit control unit 215 of the air-conditioning apparatus 200 sets the anti-freezing operation assist operation to "on" when the human sensor does not detect the presence of a person in the area to be air-conditioned by the air-conditioning apparatus 200. In other words, in the ventilation and air-conditioning system 4000, when the human sensor does not detect the presence of a person in the area to be air-conditioned by the air-conditioning apparatus 200, the improvement of the anti-freezing effect in the heat-exchange element 140 of the heat-exchange ventilation apparatus 100 is prioritized over the temperature comfort of the area to be air-conditioned.

This allows the ventilation and air-conditioning system 4000 to positively perform the anti-freezing operation assist operation when there is no person in the area to be air-conditioned, and to more quickly improve the anti-freezing effect in the heat-exchange element 140 of the heat-exchange ventilation apparatus 100.

As described above, in the ventilation and air-conditioning system 4000 according to the fourth embodiment, the air-conditioning apparatus 200 adds information on the detected condition of the human sensor connected to the air-conditioning apparatus 200 to the determination criteria for the temperature adjustment in the ventilation and air-conditioning system 3000 according to the third embodiment described above, to determine whether or not to perform the anti-freezing operation assist operation. That is, in the ventilation and air-conditioning system 4000, the air-conditioning apparatus 200 determines whether or not to perform the anti-freezing operation assist operation, based also on information on the presence or absence of a person in the area to be air-conditioned by the air-conditioning apparatus 200. This allows the ventilation and air-conditioning system 4000 to positively perform the anti-freezing operation assist operation when there is no person in the area to be air-conditioned, and to more quickly improve the anti-freezing effect in the heat-exchange element 140 of the heat-exchange ventilation apparatus 100.

<Modifications>

In the ventilation and air-conditioning system 4000 according to the fourth embodiment, when the anti-freezing operation assist request level is "provided" while the operation mode of the air-conditioning apparatus 200 is "heating", the air-conditioning apparatus 200 determines whether or not to perform the anti-freezing operation assist operation, using the time during which the indoor temperature detected by the air-conditioning apparatus 200 has not reached the set temperature, information on the difference between the indoor temperature detected by the air-conditioning apparatus 200 and the indoor temperature detected by the heat-exchange ventilation apparatus 100, and the operating status of the outdoor unit 203 connected to the indoor unit 202. However, in the ventilation and air-conditioning system 4000, if whether or not to perform the anti-freezing operation assist operation is determined based only on the difference between the indoor temperature detected by the air-conditioning apparatus 200 and the set temperature and the detection result of the human sensor without using the above information, the effect when whether or not to perform the anti-freezing operation assist operation is determined based also on the detected condition of the human sensor can be obtained as described above.

The ventilation and air-conditioning system 4000 according to the fourth embodiment allows the anti-freezing operation assist operation to be positively performed when no person is present in the area to be air-conditioned by the air-conditioning apparatus 200. On the other hand, in the case where the number of people present in the area to be air-conditioned by the air-conditioning apparatus 200 can be counted by the human sensor, when the number of people present in the area to be air-conditioned becomes equal to more than a predetermined number of people, the "anti-freezing operation assist request level" may be corrected to a level one level higher so that the space to be ventilated 50 does not fall into insufficient ventilation.

Like the ventilation and air-conditioning system 1000 according to the first embodiment, the ventilation and air-conditioning system 4000 according to the above-described fourth embodiment has the effects of being able to improve the anti-freezing effect in the heat-exchange element 140 of the heat-exchange ventilation apparatus 100 and to prevent or limit a decrease in ventilation volume due to the anti-freezing operation of the heat-exchange ventilation apparatus 100.

In the ventilation and air-conditioning system 4000 according to the fourth embodiment, the air-conditioning apparatus 200 adds the information on the detected condition of the human sensor connected to the air-conditioning apparatus 200 to the determination criteria for the temperature adjustment in the ventilation and air-conditioning system 3000 according to the third embodiment described above, to determine whether or not to perform the anti-freezing operation assist operation. That is, in the ventilation and air-conditioning system 4000, the air-conditioning apparatus 200 determines whether or not to perform the anti-freezing operation assist operation, based also on the information on the presence or absence of a person in the area to be air-conditioned by the air-conditioning apparatus 200. This allows the ventilation and air-conditioning system 4000 to positively perform the anti-freezing operation assist operation when there is no person in the area to be air-conditioned, and to more quickly improve the anti-freezing effect in the heat-exchange element 140 of the heat-exchange ventilation apparatus 100.

The functions of the ventilation apparatus controller 110 and the indoor unit controller 210 according to the first to fourth embodiments are implemented by processing circuitry. The processing circuitry may be dedicated hardware or a processing device that executes a program stored in a storage device. A microcontroller can be applied to the ventilation apparatus controller 110 and the indoor unit controller 210, but this is not limiting.

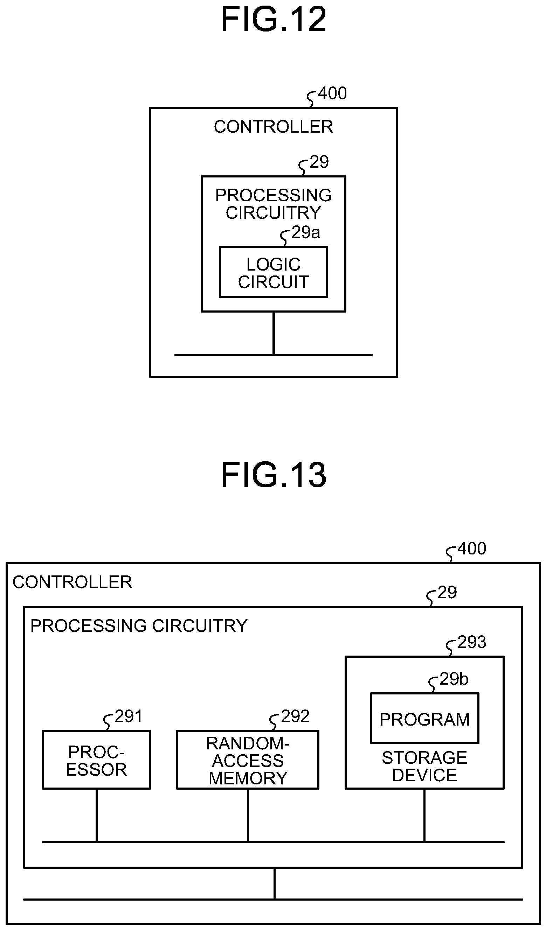

When the processing circuitry is dedicated hardware, the processing circuitry corresponds to a single circuit, a combined circuit, a programmed processor, a parallel-programmed processor, an application-specific integrated circuit, a field-programmable gate array, or a combination of them. FIG. 12 is a diagram illustrating a configuration in which the controller functions are implemented by hardware. A logic circuit 29a that implements the functions of a controller 400 is incorporated in processing circuitry 29. The controller 400 corresponds to the ventilation apparatus controller 110 and the indoor unit controller 210 according to the first to fourth embodiments.

If the processing circuitry 29 is a processing device, the functions of the controller 400 are implemented by software, firmware, or a combination of software and firmware.

FIG. 13 is a diagram illustrating a configuration in which the controller functions are implemented by software. The processing circuitry 29 includes a processor 291 that executes a program 29b, a random-access memory 292 used as a work area by the processor 291, and a storage device 293 that stores the program 29b. The processor 291 loads the program 29b stored in the storage device 293 on the random-access memory 292 and executes the program 29b, thereby implementing the functions of the controller 400. The software or firmware is described in a program language and stored in the storage device 293. The processor 291 can be exemplified by but is not limited to a central processing unit. To the storage device 293, a semiconductor memory such as a random-access memory (RAM), a read-only memory (ROM), a flash memory, an erasable programmable read-only memory (EPROM), or an electrically erasable programmable read-only memory (EEPROM) (registered trademark) can be applied. The semiconductor memory may be a nonvolatile memory or a volatile memory. To the storage device 293, other than the semiconductor memory, a magnetic disk, a flexible disk, an optical disk, a compact disk, a mini disk, or a digital versatile disc (DVD) can be applied. The processor 291 may output data such as calculation results to the storage device 293 for storage, or may store the data in an auxiliary storage device (not illustrated) via the random-access memory 292.

The processing circuitry 29 implements the functions of the controller 400 by reading and executing the program 29b stored in the storage device 293. The program 29b can be said to cause a computer to execute a procedure and a method to implement the functions of the controller 400.

For the processing circuitry 29, part of the functions of the controller 400 may be implemented by dedicated hardware, and part of the functions of the controller 400 may be implemented by software or firmware.

Thus, the processing circuitry 29 can implement the above-described functions by hardware, software, firmware, or a combination of them.

The configurations described in the above embodiments illustrate an example of the subject matter of the present invention. The techniques in the embodiments can be combined with each other, and can be combined with another known technique. The configurations can be partly omitted or changed without departing from the gist of the present invention.

Reference Signs List

29 processing circuitry; 29a logic circuit; 29b program; 50 space to be ventilated; 100, 100$_1$, 100$_2$ heat-exchange ventilation apparatus; 101 ventilation controller; 102 heat-exchange ventilation unit; 104, 104$_1$, 104$_2$, 204, 204$_1$, 204$_2$, 204$_3$, 204$_4$, 204$_5$, 204$_6$, 204$_7$ indoor inlet; 105, 105$_1$, 105$_2$, 205A, 205A$_1$, 205A$_2$, 205A$_3$, 205A$_4$, 205A$_5$, 205A$_6$, 205A$_7$, 205B, 205B$_1$, 205B$_2$, 205B$_3$, 205B$_4$, 205B$_5$, 205B$_6$, 205B$_7$, 205C, 205C$_4$, 205C$_2$, 205C$_3$, 205C$_4$, 205C$_5$, 205C$_6$, 205C$_7$, 205D, 205D$_1$, 205D$_2$, 205D$_3$, 205D$_4$, 205D$_5$, 205D$_6$, 205D$_7$ indoor outlet; 106, 106$_1$, 106$_2$ main body; 110 ventilation apparatus controller; 111 ventilation controller communication unit; 112, 212 system communication unit; 114 ventilation apparatus storage unit; 115 ventilation apparatus control unit; 116, 216 output unit; 117, 217 input unit; 120 air supply fan; 130 air exhaust fan; 140 heat-exchange element; 160, 260 indoor temperature detection unit; 170 outdoor temperature detection unit; 200, 200$_1$, 200$_2$, 200$_3$, 200$_4$, 200$_5$, 200$_6$, 200$_7$ air-conditioning apparatus; 201 air-conditioning controller; 202, 202$_1$, 202$_2$, 202$_3$, 202$_4$, 202$_5$, 202$_6$, 202$_7$ indoor unit; 203 outdoor unit; 210 indoor unit controller; 211 air-conditioning controller communication unit; 213 outdoor unit communication unit; 214 indoor unit storage unit; 215 indoor unit control unit; 220 blowing fan; 230 deflector unit; 271 compressor; 291 processor; 292 random-access memory; 293 storage device; 300 system controller; 400 controller; 1000, 2000, 3000, 4000 ventilation and air-conditioning system.

**Claims**

**1.** A ventilation and air-conditioning system comprising:

a heat-exchange ventilation apparatus including a first inlet and a first outlet each installed in a space to be ventilated, and a heat-exchange element exchanging heat between air in outdoors and air drawn in from the space to be ventilated, to discharge air in the space to be ventilated drawn in from the first inlet to the outdoors via the heat-exchange element, and to blow air in the outdoors from the first outlet into the space to be ventilated via the heat-exchange element; and

an air-conditioning apparatus comprising an indoor unit including a second inlet and a second outlet each installed in the space to be ventilated, and an outdoor unit installed outside the space to be ventilated, to adjust a temperature of the space to be ventilated by drawing in air in the space to be ventilated from the second inlet and blowing the air from the second outlet into the space to be ventilated, wherein

the air-conditioning apparatus performs an anti-freezing operation assist operation to blow air from the second outlet toward the first inlet, based on an anti-freezing operation assist request level indicating a magnitude of a risk of freezing occurring in the heat-exchange element of the heat-exchange ventilation apparatus.

2. The ventilation and air-conditioning system according to claim 1, wherein

the air-conditioning apparatus comprises
a plurality of the second outlets, and
wind direction control units provided individually at the plurality of second outlets, and
when the anti-freezing operation assist operation is performed,
of the plurality of wind direction control units, the wind direction control unit provided at the second outlet nearest to the first inlet directs air blown from the second outlet toward the first inlet, and
of the plurality of wind direction control units, the wind direction control unit provided at the second outlet not nearest to the first inlet does not direct air blown from the second outlet toward the first inlet.

3. The ventilation and air-conditioning system according to claim 2, wherein
when the air-conditioning apparatus performs the anti-freezing operation assist operation while not adjusting the temperature of the space to be ventilated, of the plurality of wind direction control units, the wind direction control unit provided at the second outlet other than the second outlet nearest to the first inlet closes the second outlet.

4. The ventilation and air-conditioning system according to any one of claims 1 to 3, wherein
the air-conditioning apparatus has a plurality of levels of temperature adjustment capability to heat air drawn in from the second inlet, and when performing the anti-freezing operation assist operation, changes the temperature adjustment capability to a level higher than a level before performing the anti-freezing operation assist operation.

5. The ventilation and air-conditioning system according to claim 4, comprising:

a first temperature detection unit to detect a temperature of air in the space to be ventilated drawn from the first inlet into the heat-exchange ventilation apparatus; and
a second temperature detection unit to detect a temperature of air drawn from the second inlet into the air-conditioning apparatus, wherein
the air-conditioning apparatus determines whether or not to adjust the temperature of the space to be ventilated, based on a result of the detection of the first temperature detection unit and a result of the detection of the second temperature detection unit, when performing the anti-freezing operation assist operation while not adjusting the temperature of the space to be ventilated.

6. The ventilation and air-conditioning system according to claim 4 or 5, wherein
the air-conditioning apparatus determines whether or not to adjust the temperature of the space to be ventilated, based on an operating status of the outdoor unit, when performing the anti-freezing operation assist operation while not adjusting the temperature of the space to be ventilated.

7. The ventilation and air-conditioning system according to any one of claims 1 to 6, wherein
the air-conditioning apparatus has a plurality of operation modes including heating, and changes the operation mode other than heating to heating when performing the anti-freezing operation assist operation.

8. The ventilation and air-conditioning system according to claim 7, wherein
the air-conditioning apparatus determines whether or not to perform the anti-freezing operation assist operation, based on which of the plurality of operation modes the air-conditioning apparatus is in.

9. The ventilation and air-conditioning system according to any one of claims 1 to 8, wherein
whether or not to perform the anti-freezing operation assist operation is determined, based on at least one of a difference between a detected temperature of air in an area to be air-conditioned by the air-conditioning apparatus in the space to be ventilated and a set temperature of the air-conditioning apparatus, or a time during which the detected temperature does not reach the set temperature.

10. The ventilation and air-conditioning system according to any one of claims 1 to 9, wherein
whether or not to perform the anti-freezing operation assist operation is determined, based on detection information from a human sensor that detects a person present in an area to be air-conditioned by the air-conditioning apparatus.

11. The ventilation and air-conditioning system according to any one of claims 1 to 10, wherein
the heat-exchange ventilation apparatus determines the anti-freezing operation assist request level, based on at least one of a temperature of air blown to the outdoors by the heat-exchange ventilation apparatus, a temperature of air drawn in from the outdoors by the heat-exchange ventilation apparatus, or a temperature of air blown into the space to be ventilated by the heat-exchange ventilation apparatus.

12. The ventilation and air-conditioning system according to any one of claims 1 to 11, wherein
the heat-exchange ventilation apparatus makes a volume of air blown from the first outlet into the space to be ventilated smaller than a volume of air drawn in from the first inlet and blown to the outdoors, based on at least one of a temperature of air blown to the outdoors by the heat-exchange ventilation apparatus, a temperature of air drawn in from the outdoors by the heat-exchange ventilation apparatus, or a temperature of air blown into the space to be ventilated by the heat-exchange ventilation apparatus, when at least one of a case where the temperature of the air blown to the outdoors is maintained in a predetermined range of temperatures for a predetermined threshold time, a case where the temperature of the air drawn in from the outdoors is maintained in a predetermined range of temperatures for a predetermined threshold time, or a case where the temperature of the air blown into the space to be ventilated is maintained in a predetermined range of temperatures for a predetermined threshold time is satisfied.

# FIG.1

# FIG.2

1000,2000,3000, 4000

100

VENTILATION CONTROLLER ~101

102

HEAT-EXCHANGE VENTILATION UNIT

VENTILATION CONTROLLER COMMUNICATION UNIT ~111

VENTILATION APPARATUS CONTROLLER ~110

VENTILATION APPARATUS CONTROL UNIT 115

TIMER

VENTILATION APPARATUS STORAGE UNIT 114

OUTPUT UNIT 116

AIR SUPPLY FAN 120

AIR EXHAUST FAN 130

INDOOR TEMPERATURE DETECTION UNIT 160

OUTDOOR TEMPERATURE DETECTION UNIT 170

SYSTEM COMMUNICATION UNIT 112

INPUT UNIT 117

AIR-CONDITIONING APPARATUS 200

SYSTEM CONTROLLER 300

# FIG.3

| OUTPUT DETERMINATION CONDITIONS | | | DETERMINATION | | |
|---|---|---|---|---|---|
| START/ STOP | EXHAUST TEMPER- ATURE | DURATION OF EXHAUST TEMPERATURE DECREASE | AIR SUPPLY FAN OUTPUT | AIR EXHAUST FAN OUTPUT | ANTI-FREEZING OPERATION ASSIST REQUEST LEVEL |
| STOP | - | - | OFF | OFF | NONE |
| OPER- ATION | 5°C OR MORE | - | HIGH | HIGH | NONE |
| | 2°C OR MORE AND LESS THAN 5°C | EXHAUST TEMPERATURE LESS THAN 5°C:LESS THAN 50 MIN. | HIGH | HIGH | LOW |
| | | EXHAUST TEMPERATURE LESS THAN 5°C:50 MIN. OR MORE | 10-MIN. OFF | HIGH | LOW |
| | 0°C OR MORE AND LESS THAN 2°C | EXHAUST TEMPERATURE LESS THAN 2°C:LESS THAN 30 MIN. | HIGH | HIGH | MEDIUM |
| | | EXHAUST TEMPERATURE LESS THAN 2°C:30 MIN. OR MORE | 30-MIN. OFF | HIGH | MEDIUM |
| | LESS THAN 0°C | EXHAUST TEMPERATURE LESS THAN 0°C:LESS THAN 10 MIN. | HIGH | HIGH | HIGH |
| | | EXHAUST TEMPERATURE LESS THAN 0°C:10 MIN. OR MORE | 50-MIN. OFF | HIGH | HIGH |

EP 4 130 591 A1

# FIG.4

1000,2000,3000,
4000

200

AIR-CONDITIONING
CONTROLLER — 201

202

INDOOR UNIT

AIR-CONDITIONING
CONTROLLER
COMMUNICATION UNIT — 211

INDOOR
UNIT
CONTROLLER — 210

203

OUTDOOR
UNIT

COM-
PRES-
SOR

271

213

OUT-
DOOR
UNIT
COM-
MUNICA-
TION
UNIT

215

INDOOR
UNIT
CONTROL
UNIT

216

OUTPUT
UNIT

220

BLOWING
FAN

230

DEFLECTOR
UNITS

214

INDOOR
UNIT
STORAGE
UNIT

212

SYSTEM
COMMUNICATION
UNIT

217

INPUT
UNIT

260

INDOOR TEM-
PERATURE
DETECTION
UNIT

100

HEAT-
EXCHANGE
VENTILATION
APPARATUS

300

SYSTEM
CONTROLLER

# FIG.5

| OPER-ATION MODE | ANTI-FREEZING OPERATION ASSIST REQUEST LEVEL | INDOOR TEMPERATURE DETECTED BY AIR-CONDITIONING APPARATUS – SET TEMPERATURE | DURATION OF NON-ATTAINMENT OF SET TEMPERATURE | BLOWING FAN OUTPUT | DEFLECTOR UNIT OUTPUT | | TEMPER-ATURE ADJUSTMENT (CAPABILITY) | ANTI-FREEZING OPERATION ASSIST OPERATION |
|---|---|---|---|---|---|---|---|---|
| | | | | | NEAREST TO INDOOR INLET OF HEAT-EXCHANGE VENTILATION APPARATUS | OTHERS | | |
| STOP | NONE | - | - | STOP | CLOSED | CLOSED | OFF(0%) | OFF |
| STOP | LOW | - | - | LOW | HORIZONTAL | CLOSED | OFF(0%) | ON |
| STOP | MEDIUM | - | - | LOW | HORIZONTAL | CLOSED | ON(50%) | ON(TEMPERATURE ADJUSTMENT CAPABILITY INCREASE) |
| STOP | HIGH | - | - | LOW | HORIZONTAL | CLOSED | ON(100%) | ON(TEMPERATURE ADJUSTMENT CAPABILITY INCREASE) |
| COOLING | - | LESS THAN 0°C | - | CONTROL VALUE | CONTROL VALUE | CONTROL VALUE | OFF(0%) | OFF |
| COOLING | - | 0°C OR MORE AND LESS THAN 2°C | - | CONTROL VALUE | CONTROL VALUE | CONTROL VALUE | ON(50%) | OFF |
| COOLING | - | 2°C OR MORE | - | CONTROL VALUE | CONTROL VALUE | CONTROL VALUE | ON(100%) | OFF |
| HEATING | NONE | 0°C OR MORE | - | STOP | CONTROL VALUE | CONTROL VALUE | OFF(0%) | OFF |
| HEATING | NONE | -3°C OR MORE AND LESS THAN 0°C | - | CONTROL VALUE | CONTROL VALUE | CONTROL VALUE | ON(50%) | OFF |
| HEATING | NONE | LESS THAN -3°C | - | CONTROL VALUE | CONTROL VALUE | CONTROL VALUE | ON(100%) | OFF |
| HEATING | LOW | 0°C OR MORE | - | LOW | HORIZONTAL | CLOSED | OFF(0%) | ON |
| HEATING | LOW | -3°C OR MORE AND LESS THAN 0°C | - | CONTROL VALUE | CONTROL VALUE | CONTROL VALUE | ON(50%) | OFF |
| HEATING | LOW | LESS THAN -3°C | - | CONTROL VALUE | CONTROL VALUE | CONTROL VALUE | ON(100%) | OFF |
| HEATING | MEDIUM | 0°C OR MORE | - | LOW | HORIZONTAL | CLOSED | ON(50%) | ON(TEMPERATURE ADJUSTMENT CAPABILITY INCREASE) |
| HEATING | MEDIUM | -3°C OR MORE AND LESS THAN 0°C | LESS THAN 30 MIN. | CONTROL VALUE | HORIZONTAL | CONTROL VALUE | ON(50%) | ON |
| HEATING | MEDIUM | -3°C OR MORE AND LESS THAN 0°C | 30 MIN. OR MORE | CONTROL VALUE | CONTROL VALUE | CONTROL VALUE | ON(50%) | OFF |
| HEATING | MEDIUM | LESS THAN -3°C | - | CONTROL VALUE | CONTROL VALUE | CONTROL VALUE | ON(100%) | OFF |
| HEATING | HIGH | 0°C OR MORE | - | LOW | HORIZONTAL | CLOSED | ON(100%) | ON(TEMPERATURE ADJUSTMENT CAPABILITY INCREASE) |
| HEATING | HIGH | -3°C OR MORE AND LESS THAN 0°C | LESS THAN 30 MIN. | CONTROL VALUE | HORIZONTAL | CONTROL VALUE | ON(100%) | ON(TEMPERATURE ADJUSTMENT CAPABILITY INCREASE) |
| HEATING | HIGH | -3°C OR MORE AND LESS THAN 0°C | 30 MIN. OR MORE | CONTROL VALUE | CONTROL VALUE | CONTROL VALUE | ON(50%) | OFF |
| HEATING | HIGH | LESS THAN -3°C | LESS THAN 15 MIN. | CONTROL VALUE | HORIZONTAL | CONTROL VALUE | ON(100%) | ON |
| HEATING | HIGH | LESS THAN -3°C | 15 MIN. OR MORE | CONTROL VALUE | CONTROL VALUE | CONTROL VALUE | ON(100%) | OFF |

OUTPUT DETERMINATION CONDITIONS — DETERMINATION

EP 4 130 591 A1

# FIG.6

EP 4 130 591 A1

# FIG.7

EP 4 130 591 A1

# FIG.8

# FIG.9

| OPERATION MODE | ANTI-FREEZING OPERATION ASSIST REQUEST LEVEL | OUTPUT DETERMINATION CONDITIONS | | | DETERMINATION | | | | |
|---|---|---|---|---|---|---|---|---|---|
| | | INDOOR TEMPERATURE DETECTED BY AIR-CONDITIONING APPARATUS – SET TEMPERATURE | DURATION OF NON-ATTAINMENT OF SET TEMPERATURE | INDOOR TEMPERATURE DETECTED BY AIR-CONDITIONING APPARATUS – INDOOR TEMPERATURE DETECTED BY HEAT-EXCHANGE VENTILATION APPARATUS | BLOWING FAN OUTPUT | DEFLECTOR UNIT OUTPUT | | TEMPERATURE ADJUSTMENT (CAPABILITY) | ANTI-FREEZING OPERATION ASSIST OPERATION |
| | | | | | | NEAREST TO INDOOR INLET OF HEAT-EXCHANGE VENTILATION APPARATUS | OTHERS | | |
| STOP | NONE | - | - | - | STOP | CLOSED | CLOSED | OFF(0%) | OFF |
| | LOW | - | - | 1°C OR MORE | LOW | HORIZONTAL | CLOSED | OFF(0%) | ON |
| | | | | LESS THAN 1°C | LOW | HORIZONTAL | CLOSED | ON(50%) | ON(TEMPERATURE ADJUSTMENT CAPABILITY INCREASE) |
| | MEDIUM | - | - | 2°C OR MORE | LOW | HORIZONTAL | CLOSED | OFF(0%) | ON |
| | | | | LESS THAN 2°C | LOW | HORIZONTAL | CLOSED | ON(50%) | ON(TEMPERATURE ADJUSTMENT CAPABILITY INCREASE) |
| | HIGH | - | - | 3°C OR MORE | LOW | HORIZONTAL | CLOSED | OFF(0%) | ON |
| | | | | LESS THAN 3°C | LOW | HORIZONTAL | CLOSED | ON(100%) | ON(TEMPERATURE ADJUSTMENT CAPABILITY INCREASE) |
| COOLING | - | LESS THAN 0°C | - | - | CONTROL VALUE | CONTROL VALUE | CONTROL VALUE | OFF(0%) | OFF |
| | | 0°C OR MORE AND LESS THAN 2°C | - | - | CONTROL VALUE | CONTROL VALUE | CONTROL VALUE | ON(50%) | OFF |
| | | 2°C OR MORE | - | - | CONTROL VALUE | CONTROL VALUE | CONTROL VALUE | ON(100%) | OFF |
| HEATING | NONE | 0°C OR MORE | - | - | STOP | CONTROL VALUE | CONTROL VALUE | OFF(0%) | OFF |
| | | -3°C OR MORE AND LESS THAN 0°C | - | - | CONTROL VALUE | CONTROL VALUE | CONTROL VALUE | ON(50%) | OFF |
| | | LESS THAN -3°C | - | - | CONTROL VALUE | CONTROL VALUE | CONTROL VALUE | ON(100%) | OFF |
| | LOW | 0°C OR MORE | - | 1°C OR MORE | LOW | HORIZONTAL | CLOSED | OFF(0%) | ON |
| | | | | LESS THAN 1°C | LOW | HORIZONTAL | CLOSED | ON(50%) | ON(TEMPERATURE ADJUSTMENT CAPABILITY INCREASE) |
| | | -3°C OR MORE AND LESS THAN 0°C | - | - | CONTROL VALUE | CONTROL VALUE | CONTROL VALUE | ON(50%) | OFF |
| | | LESS THAN -3°C | - | - | CONTROL VALUE | CONTROL VALUE | CONTROL VALUE | ON(100%) | OFF |
| | MEDIUM | 0°C OR MORE | - | 2°C OR MORE | LOW | HORIZONTAL | CLOSED | OFF(0%) | ON |
| | | | | LESS THAN 2°C | LOW | HORIZONTAL | CLOSED | ON(50%) | ON(TEMPERATURE ADJUSTMENT CAPABILITY INCREASE) |
| | | -3°C OR MORE AND LESS THAN 0°C | LESS THAN 30 MIN. | - | CONTROL VALUE | HORIZONTAL | CONTROL VALUE | ON(50%) | ON |
| | | | 30 MIN. OR MORE | - | CONTROL VALUE | CONTROL VALUE | CONTROL VALUE | ON(50%) | OFF |
| | | LESS THAN -3°C | - | - | CONTROL VALUE | CONTROL VALUE | CONTROL VALUE | ON(100%) | OFF |
| | HIGH | 0°C OR MORE | - | 3°C OR MORE | LOW | HORIZONTAL | CLOSED | OFF(0%) | ON |
| | | | | LESS THAN 3°C | LOW | HORIZONTAL | CLOSED | ON(100%) | ON(TEMPERATURE ADJUSTMENT CAPABILITY INCREASE) |
| | | -3°C OR MORE AND LESS THAN 0°C | LESS THAN 30 MIN. | - | CONTROL VALUE | HORIZONTAL | CONTROL VALUE | ON(100%) | ON(TEMPERATURE ADJUSTMENT CAPABILITY INCREASE) |
| | | | 30 MIN. OR MORE | - | CONTROL VALUE | CONTROL VALUE | CONTROL VALUE | ON(50%) | OFF |
| | | LESS THAN -3°C | LESS THAN 15 MIN. | - | CONTROL VALUE | HORIZONTAL | CONTROL VALUE | ON(100%) | ON |
| | | | 15 MIN. OR MORE | - | CONTROL VALUE | CONTROL VALUE | CONTROL VALUE | ON(100%) | OFF |

EP 4 130 591 A1

# FIG.10

| OPERATION MODE | ANTI-FREEZING OPERATION ASSIST REQUEST LEVEL | OUTPUT DETERMINATION CONDITIONS | | | | DETERMINATION | | | | ANTI-FREEZING OPERATION ASSIST OPERATION |
| | | INDOOR TEMPERATURE DETECTED BY AIR-CONDITIONING APPARATUS – SET TEMPERATURE | DURATION OF NON-ATTAINMENT OF SET TEMPERATURE | INDOOR TEMPERATURE DETECTED BY AIR-CONDITIONING APPARATUS – INDOOR TEMPERATURE DETECTED BY HEAT-EXCHANGE VENTILATION APPARATUS | OUTDOOR UNIT OPERATING STATUS | BLOWING FAN OUTPUT | DEFLECTOR UNIT OUTPUT | | TEMPERATURE ADJUSTMENT (CAPABILITY) | |
| | | | | | | | NEAREST TO INDOOR INLET OF HEAT-EXCHANGE VENTILATION APPARATUS | OTHERS | | |
|---|---|---|---|---|---|---|---|---|---|---|
| STOP | NONE | - | - | - | - | STOP | CLOSED | CLOSED | OFF(0%) | OFF |
| STOP | LOW | - | - | 1°C OR MORE | COMPRESSOR OFF | LOW | HORIZONTAL | CLOSED | OFF(0%) | ON |
| STOP | LOW | - | - | 1°C OR MORE | COMPRESSOR ON | LOW | HORIZONTAL | CLOSED | ON(50%) | ON(TEMPERATURE ADJUSTMENT CAPABILITY INCREASE) |
| STOP | LOW | - | - | LESS THAN 1°C | - | LOW | HORIZONTAL | CLOSED | ON(50%) | ON(TEMPERATURE ADJUSTMENT CAPABILITY INCREASE) |
| STOP | MEDIUM | - | - | 2°C OR MORE | COMPRESSOR OFF | LOW | HORIZONTAL | CLOSED | OFF(0%) | ON |
| STOP | MEDIUM | - | - | 2°C OR MORE | COMPRESSOR ON | LOW | HORIZONTAL | CLOSED | ON(50%) | ON(TEMPERATURE ADJUSTMENT CAPABILITY INCREASE) |
| STOP | MEDIUM | - | - | LESS THAN 2°C | - | LOW | HORIZONTAL | CLOSED | ON(50%) | ON(TEMPERATURE ADJUSTMENT CAPABILITY INCREASE) |
| STOP | HIGH | - | - | 3°C OR MORE | COMPRESSOR OFF | LOW | HORIZONTAL | CLOSED | OFF(0%) | ON |
| STOP | HIGH | - | - | 3°C OR MORE | COMPRESSOR ON | LOW | HORIZONTAL | CLOSED | ON(50%) | ON(TEMPERATURE ADJUSTMENT CAPABILITY INCREASE) |
| STOP | HIGH | - | - | LESS THAN 3°C | - | LOW | HORIZONTAL | CLOSED | ON(100%) | ON(TEMPERATURE ADJUSTMENT CAPABILITY INCREASE) |
| COOLING | - | LESS THAN 0°C | - | - | - | CONTROL VALUE | CONTROL VALUE | CONTROL VALUE | OFF(0%) | OFF |
| COOLING | - | 0°C OR MORE AND LESS THAN 2°C | - | - | - | CONTROL VALUE | CONTROL VALUE | CONTROL VALUE | ON(50%) | OFF |
| COOLING | - | 2°C OR MORE | - | - | - | CONTROL VALUE | CONTROL VALUE | CONTROL VALUE | ON(100%) | OFF |
| HEATING | NONE | 0°C OR MORE | - | - | - | STOP | CONTROL VALUE | CONTROL VALUE | OFF(0%) | OFF |
| HEATING | NONE | -3°C OR MORE AND LESS THAN 0°C | - | - | - | CONTROL VALUE | CONTROL VALUE | CONTROL VALUE | ON(50%) | OFF |
| HEATING | NONE | LESS THAN -3°C | - | - | - | CONTROL VALUE | CONTROL VALUE | CONTROL VALUE | ON(100%) | OFF |
| HEATING | LOW | 0°C OR MORE | - | 1°C OR MORE | COMPRESSOR OFF | LOW | HORIZONTAL | CLOSED | OFF(0%) | ON |
| HEATING | LOW | 0°C OR MORE | - | 1°C OR MORE | COMPRESSOR ON | LOW | HORIZONTAL | CLOSED | ON(50%) | ON(TEMPERATURE ADJUSTMENT CAPABILITY INCREASE) |
| HEATING | LOW | 0°C OR MORE | - | LESS THAN 1°C | - | LOW | HORIZONTAL | CLOSED | ON(50%) | ON(TEMPERATURE ADJUSTMENT CAPABILITY INCREASE) |
| HEATING | LOW | -3°C OR MORE AND LESS THAN 0°C | - | - | - | CONTROL VALUE | CONTROL VALUE | CONTROL VALUE | ON(50%) | OFF |
| HEATING | LOW | LESS THAN -3°C | - | - | - | CONTROL VALUE | CONTROL VALUE | CONTROL VALUE | ON(100%) | OFF |
| HEATING | MEDIUM | 0°C OR MORE | - | 2°C OR MORE | COMPRESSOR OFF | LOW | HORIZONTAL | CLOSED | OFF(0%) | ON |
| HEATING | MEDIUM | 0°C OR MORE | - | 2°C OR MORE | COMPRESSOR ON | LOW | HORIZONTAL | CLOSED | ON(50%) | ON(TEMPERATURE ADJUSTMENT CAPABILITY INCREASE) |
| HEATING | MEDIUM | 0°C OR MORE | - | LESS THAN 2°C | - | LOW | HORIZONTAL | CLOSED | ON(50%) | ON(TEMPERATURE ADJUSTMENT CAPABILITY INCREASE) |
| HEATING | MEDIUM | -3°C OR MORE AND LESS THAN 0°C | LESS THAN 30 MIN. | - | - | CONTROL VALUE | HORIZONTAL | CONTROL VALUE | ON(50%) | ON |
| HEATING | MEDIUM | -3°C OR MORE AND LESS THAN 0°C | 30 MIN. OR MORE | - | - | CONTROL VALUE | CONTROL VALUE | CONTROL VALUE | ON(50%) | OFF |
| HEATING | MEDIUM | LESS THAN -3°C | - | - | - | CONTROL VALUE | CONTROL VALUE | CONTROL VALUE | ON(100%) | OFF |
| HEATING | HIGH | 0°C OR MORE | - | 3°C OR MORE | COMPRESSOR OFF | LOW | HORIZONTAL | CLOSED | OFF(0%) | ON |
| HEATING | HIGH | 0°C OR MORE | - | 3°C OR MORE | COMPRESSOR ON | LOW | HORIZONTAL | CLOSED | ON(50%) | ON(TEMPERATURE ADJUSTMENT CAPABILITY INCREASE) |
| HEATING | HIGH | 0°C OR MORE | - | LESS THAN 3°C | - | LOW | HORIZONTAL | CLOSED | ON(100%) | ON(TEMPERATURE ADJUSTMENT CAPABILITY INCREASE) |
| HEATING | HIGH | -3°C OR MORE AND LESS THAN 0°C | LESS THAN 30 MIN. | - | - | CONTROL VALUE | HORIZONTAL | CONTROL VALUE | ON(100%) | ON(TEMPERATURE ADJUSTMENT CAPABILITY INCREASE) |
| HEATING | HIGH | -3°C OR MORE AND LESS THAN 0°C | 30 MIN. OR MORE | - | - | CONTROL VALUE | CONTROL VALUE | CONTROL VALUE | ON(50%) | OFF |
| HEATING | HIGH | LESS THAN -3°C | LESS THAN 15 MIN. | - | - | CONTROL VALUE | HORIZONTAL | CONTROL VALUE | ON(100%) | ON |
| HEATING | HIGH | LESS THAN -3°C | 15 MIN. OR MORE | - | - | CONTROL VALUE | CONTROL VALUE | CONTROL VALUE | ON(100%) | OFF |

# FIG.11

| OPER-ATION MODE | ANTI-FREEZING OPERATION ASSIST REQUEST LEVEL | INDOOR TEMPERATURE DETECTED BY AIR-CONDITIONING APPARATUS – SET TEMPERATURE | DURATION OF NON-ATTAINMENT OF SET TEMPERATURE | HUMAN SENSOR | INDOOR TEMPERATURE DETECTED BY AIR-CONDITIONING APPARATUS – INDOOR TEMPERATURE DETECTED BY HEAT-EXCHANGE VENTILATION APPARATUS | OUTDOOR UNIT OPERATING STATUS | BLOWING FAN OUTPUT | DEFLECTOR UNIT OUTPUT: NEAREST TO INDOOR IN-LET OF HEAT-EXCHANGE VENTILATION APPARATUS | DEFLECTOR UNIT OUTPUT: OTHERS | TEMPERATURE ADJUSTMENT (CAPABILITY) | ANTI-FREEZING OPERATION ASSIST OPERATION |
|---|---|---|---|---|---|---|---|---|---|---|---|
| STOP | NONE | - | - | - | - | - | STOP | CLOSED | CLOSED | OFF(0%) | OFF |
| | LOW | - | - | - | 1°C OR MORE | COMPRESSOR OFF | LOW | HORIZONTAL | CLOSED | OFF(0%) | ON |
| | | | | | 1°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 1°C | - | LOW | HORIZONTAL | CLOSED | ON(50%) | ON(TEMPERATURE ADJUSTMENT CAPABILITY INCREASE) |
| | MEDIUM | - | - | - | 2°C OR MORE | COMPRESSOR OFF | LOW | HORIZONTAL | CLOSED | OFF(0%) | ON |
| | | | | | 2°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 2°C | - | LOW | HORIZONTAL | CLOSED | ON(50%) | ON(TEMPERATURE ADJUSTMENT CAPABILITY INCREASE) |
| | HIGH | - | - | - | 3°C OR MORE | COMPRESSOR OFF | LOW | HORIZONTAL | CLOSED | OFF(0%) | ON |
| | | | | | 3°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 3°C | - | LOW | HORIZONTAL | CLOSED | ON(100%) | ON(TEMPERATURE ADJUSTMENT CAPABILITY INCREASE) |
| COOL-ING | - | LESS THAN 0°C | - | - | - | - | CONTROL VALUE | CONTROL VALUE | CONTROL VALUE | OFF(0%) | OFF |
| | | 0°C OR MORE AND LESS THAN 2°C | - | - | - | - | CONTROL VALUE | CONTROL VALUE | CONTROL VALUE | ON(50%) | OFF |
| | | 2°C OR MORE | - | - | - | - | CONTROL VALUE | CONTROL VALUE | CONTROL VALUE | ON(100%) | OFF |
| HEAT-ING | NONE | 0°C OR MORE | - | - | - | - | STOP | CONTROL VALUE | CONTROL VALUE | OFF(0%) | OFF |
| | | -3°C OR MORE AND LESS THAN 0°C | - | - | - | - | CONTROL VALUE | CONTROL VALUE | CONTROL VALUE | ON(50%) | OFF |
| | | LESS THAN -3°C | - | - | - | - | CONTROL VALUE | CONTROL VALUE | CONTROL VALUE | ON(100%) | OFF |
| | LOW | 0°C OR MORE | - | - | 1°C OR MORE | COMPRESSOR OFF | LOW | HORIZONTAL | CLOSED | OFF(0%) | ON |
| | | | | | 1°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 1°C | - | LOW | HORIZONTAL | CLOSED | ON(50%) | ON(TEMPERATURE ADJUSTMENT CAPABILITY INCREASE) |
| | | -3°C OR MORE AND LESS THAN 0°C | - | PRESENT | - | - | CONTROL VALUE | CONTROL VALUE | CONTROL VALUE | ON(50%) | OFF |
| | | | | ABSENT | - | - | CONTROL VALUE | HORIZONTAL | CONTROL VALUE | ON(50%) | ON |
| | | LESS THAN -3°C | - | PRESENT | - | - | CONTROL VALUE | CONTROL VALUE | CONTROL VALUE | ON(100%) | OFF |
| | | | | ABSENT | - | - | CONTROL VALUE | HORIZONTAL | CONTROL VALUE | ON(100%) | ON |
| | MEDIUM | 0°C OR MORE | - | - | 2°C OR MORE | COMPRESSOR OFF | LOW | HORIZONTAL | CLOSED | OFF(0%) | ON |
| | | | | | 2°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 2°C | - | LOW | HORIZONTAL | CLOSED | ON(50%) | ON(TEMPERATURE ADJUSTMENT CAPABILITY INCREASE) |
| | | -3°C OR MORE AND LESS THAN 0°C | LESS THAN 30 MIN. | - | - | - | CONTROL VALUE | HORIZONTAL | CONTROL VALUE | ON(50%) | ON |
| | | | 30 MIN. OR MORE | PRESENT | - | - | CONTROL VALUE | CONTROL VALUE | CONTROL VALUE | ON(50%) | OFF |
| | | | | ABSENT | - | - | CONTROL VALUE | HORIZONTAL | CONTROL VALUE | ON(50%) | ON |
| | | LESS THAN -3°C | - | - | - | - | CONTROL VALUE | CONTROL VALUE | CONTROL VALUE | ON(100%) | OFF |
| | HIGH | 0°C OR MORE | - | - | 3°C OR MORE | COMPRESSOR OFF | LOW | HORIZONTAL | CLOSED | OFF(0%) | ON |
| | | | | | 3°C OR MORE | COMPRESSOR ON | LOW | HORIZONTAL | CLOSED | ON(50%) | ON(TEMPERATURE ADJUSTMENT CAPABILITY INCREASE) |
| | | | | | LESS THAN 3°C | - | LOW | HORIZONTAL | CLOSED | ON(100%) | ON(TEMPERATURE ADJUSTMENT CAPABILITY INCREASE) |
| | | -3°C OR MORE AND LESS THAN 0°C | LESS THAN 30 MIN. | - | - | - | CONTROL VALUE | HORIZONTAL | CONTROL VALUE | ON(100%) | ON(TEMPERATURE ADJUSTMENT CAPABILITY INCREASE) |
| | | | 30 MIN. OR MORE | PRESENT | - | - | CONTROL VALUE | CONTROL VALUE | CONTROL VALUE | ON(50%) | OFF |
| | | | | ABSENT | - | - | CONTROL VALUE | HORIZONTAL | CONTROL VALUE | ON(50%) | ON |
| | | LESS THAN -3°C | LESS THAN 15 MIN. | - | - | - | CONTROL VALUE | HORIZONTAL | CONTROL VALUE | ON(100%) | ON |
| | | | 15 MIN. OR MORE | PRESENT | - | - | CONTROL VALUE | CONTROL VALUE | CONTROL VALUE | ON(100%) | OFF |
| | | | | ABSENT | - | - | CONTROL VALUE | HORIZONTAL | CONTROL VALUE | ON(100%) | ON |

# FIG.12

400

CONTROLLER

29

PROCESSING
CIRCUITRY

29a

LOGIC
CIRCUIT

# FIG.13

400

CONTROLLER

29

PROCESSING CIRCUITRY

293

29b

291

292

PROGRAM

PROC-
ESSOR

RANDOM-
ACCESS
MEMORY

STORAGE
DEVICE

## INTERNATIONAL SEARCH REPORT

| International application No. |
| --- |
| PCT/JP2020/014202 |

| A. CLASSIFICATION OF SUBJECT MATTER |
| --- |
| F24F7/007(2006.01)i; F24F7/08(2006.01)i; F24F 11/41(2018.01)i; F24F 11/79(2018.01)i<br>FI: F24F7/007 B; F24F7/08 101B; F24F7/08 101J; F24F11/41; F24F11/79<br>According to International Patent Classification (IPC) or to both national classification and IPC |

| B. FIELDS SEARCHED |
| --- |

Minimum documentation searched (classification system followed by classification symbols)
F24F7/007; F24F7/08; F24F11/41; F24F11/79

| Documentation searched other than minimum documentation to the extent that such documents are included in the fields searched | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

| C. DOCUMENTS CONSIDERED TO BE RELEVANT | | | |
| --- | --- | --- | --- |
| Category* | Citation of document, with indication, where appropriate, of the relevant passages | | Relevant to claim No. |
| A | JP 2008-209034 A (DAIKIN INDUSTRIES, LTD.) 11 September 2008 (2008-09-11) entire text, all drawings | | 1-12 |
| A | JP 04-076327 A (DAIKIN INDUSTRIES, LTD.) 11 March 1992 (1992-03-11) entire text, all drawings | | 1-12 |
| A | JP 2006-071225 A (SANYO ELECTRIC CO., LTD.) 16 March 2006 (2006-03-16) entire text, all drawings | | 1-12 |
| A | JP 2002-071184 A (MITSUBISHI ELECTRIC CORP.) 08 March 2002 (2002-03-08) entire text, all drawings | | 1-12 |
| A | WO 2018/220830 A1 (MITSUBISHI ELECTRIC CORP.) 06 December 2018 (2018-12-06) entire text, all drawings | | 1-12 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 June 2020 (08.06.2020) | 16 June 2020 (16.06.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2020/014202

| Patent Documents referred in the Report | Publication Date | Patent Family | Publication Date |
|---|---|---|---|
| JP 2008-209034 A | 11 Sep. 2008 | US 2010/0015906 A1 entire text, all drawings WO 2008/102741 A1 EP 2116786 A1 CN 101617176 A KR 10-2009-0119887 A | |
| JP 04-076327 A | 11 Mar. 1992 | (Family: none) | |
| JP 2006-071225 A | 16 Mar. 2006 | EP 1632730 A2 entire text, all drawings KR 10-2006-0050949 A CN 1743742 A | |
| JP 2002-071184 A | 08 Mar. 2002 | (Family: none) | |
| WO 2018/220830 A1 | 06 Dec. 2018 | (Family: none) | |

Form PCT/ISA/210 (patent family annex) (January 2015)

**EP 4 130 591 A1**

**Patent documents cited in the description**

- JP 5858061 B